# EUROPEAN PATENT SPECIFICATION

(11) **EP 4 032 930 B1**
(45) Date of publication and mention of the grant of the patent: **30.08.2023**
(21) Application number: 21152882.3
(22) Date of filing: 22.01.2021
(51) Int. Cl.: C08G 18/78, C08G 73/02

(54) **BIURET-BASED QUATERNIZED POLYMERS AND THEIR USE IN METAL OR METAL ALLOY PLATING BATHS**
BIURETBASIERTE QUATERNISIERTE POLYMERE UND DEREN VERWENDUNG IN METALL- ODER METALLLEGIERUNGSBÄDERN
POLYMÈRES QUATERNISÉS À BASE DE BIURET ET LEUR UTILISATION DANS DES BAINS DE PLACAGE DE MÉTAL OU D'ALLIAGE MÉTALLIQUE

(43) Date of publication of application: 27.07.2022
(73) Proprietor: Atotech Deutschland GmbH & Co. KG, 10553 Berlin (DE)
(72) Inventor: Brunner, Heiko, 10553 Berlin (DE); Heyde, Sandra, 10553 Berlin (DE); Rückbrod, Sven, 10553 Berlin (DE); Wenzel, Agnieszka, 10553 Berlin (DE); Haack, Peter, 10553 Berlin (DE); Llavona-Serrano, Angela, 10553 Berlin (DE); Hilbert, Frank, 10553 Berlin (DE); Luttmann, Sven, 10553 Berlin (DE)
(74) Representative: Atotech Deutschland GmbH & Co. KG

(56) References cited:
- CN-A- 101 137 718
- US-A- 4 081 341
- US-A1- 2006 202 171

## Description

### Field of the Invention

The invention relates to biuret-based quaternized polymers, as well the corresponding biuret-based quaternized monomers and a method of synthesizing said biuret-based quaternized polymers from said biuret-based quaternized monomers, as well as metal or metal alloy plating baths comprising said polymers as additives and a method for deposition of a metal or metal alloy on a substrate.

In particular, the invention relates to biuret-based quaternized polymers as additives in the electrolytic deposition of copper or copper alloys. The plating bath compositions are suitable in the manufacture of printed circuit boards, IC substrates and the like as well as for metallisation of semiconducting and glass substrates.

### Background of the Invention

Aqueous plating baths for electrolytic deposition of copper are used in many fields, e.g. for manufacturing of decorative surfaces in automotive or white goods industry or for manufacturing printed circuit boards and IC substrates where fine structures like trenches, through holes (TH), blind micro vias (BMV) and pillar bumps need to be plated with copper. Copper is used to build up the conductive lines, wherein the electrolytic deposition of copper is fast and cost-efficient.

Another application of such electrolytic deposition of copper is filling of recessed structures such as through silicon vias (TSV) and dual damascene plating or forming redistribution layers (RDL) and pillar bumps in and on semiconducting substrates. Still another application which is becoming more demanding is filling through glass vias, i.e. holes and related recessed structures in glass substrates with copper or copper alloys by electroplating.

Conventionally, a combination of various additives is used in aqueous plating bath compositions. For example, electrolytic copper plating baths comprise a multitude of individual additives including levellers, carrier-suppressors and accelerator-brighteners.

The patent application EP 1 069 211 A2 discloses aqueous copper plating baths comprising a source of copper ions, an acid, a carrier additive, a brightener additive and a leveller additive which can be poly[bis(2-chloroethyl)ether-alt-1,3-bis[3-(dimethyla-mino)propyl]urea (CAS-No. 68555-36-2) which contains an organo-bound halide atom (e.g., covalent C-CI bonds) in at least one terminus.

US 2009/0205969 A1 describes cross-linked polymers made from urea, N,N dialkyl-aminoalkylamine and N,N-bis-(aminoalkyl)-alkylamine as additive for electrolytic metal deposition. The process disclosed therein relates to electrolytic zinc deposition.

Similar urea-based polymers are also reported in US 4,157,388 wherein all urea moieties are bridged via nitrogen containing alkylenes, i.e. secondary, tertiary amines and the like. Cationic derivatives and their use in electrolytic plating bath are disclosed in the German patent application DE 10 2005 060 030 A1. The individual urea moieties in these polymers are linked by quaternary ammonium derivatives.

Also, WO 2007/024606 teaches urea, thiourea and guanidine polymers as additives in cosmetic applications wherein the individual urea, thiourea and guanidine moieties are linked by quaternary ammonium moieties.

Ureyl polymers are known in the art from EP 2 735 627 A1 as levellers for the electrolytic deposition of copper. Such polymers are can be obtained by a po-lyaddition of aminourea derivatives and nucleophiles. WO 2011/029781 teaches the same polymers for the electrolytic deposition of zinc. The latter document also teaches bisurea derivatives of a general formula without disclosing any specific examples. Moreover, the examples relating to said structures are diamides (examples 5 and 18 therein).

EP 3 135 709 B1 discloses imidazolyl urea polymers and their use in metal or metal alloy plating bath compositions.

EP 2 922 985 B1 discloses copper plating bath compositions comprising at least one urelyene polymer.

EP 3 360 988 B1 and EP 3 286 358 B1 disclose pyridinium and guanidine compounds and metal or metal alloy plating baths containing said compounds.

However, such additives when used in acidic copper plating baths are often not suitable to fulfil the current and future requirements in manufacture of advanced printed circuit boards, IC substrates and metallisation of semiconducting and glass substrates. Depending on the circuitry layout, through-holes (THs') in printed circuit boards and IC substrates need to be plated with copper in a particular to obtain a conformal plated layer. Typical requirements for TH deposition exclude plating defects as crystal structure defects and corner flattening within the layer deposited at the THs' and also exclude the formation of defects at the surface of the layer deposited at the THs'. In metallisation of THs' a uniform thickness and even surface of the deposited layer is required. Moreover, the thickness of the copper layer inside the TH (on the walls of the TH) should be in a comparable dimension like the thickness of the copper layer on the surface of the substrate. In case of TH filling, the deposited copper shall not show defects as voids.

### Objective of the Invention

Thus, it is an objective of the present invention to provide a compound usable in an aqueous metal plating bath, preferably in a copper plating bath for electrolytic deposition of copper or copper alloys, as well as said aqueous metal or metal alloy plating bath, which fulfils the requirements for the above mentioned applications in the field of decorative surfaces, printed circuit board, IC substrate manufacturing as well as metallisation of semiconducting substrates like through-hole (TH) plating, TSV filling, dual damascene plating, deposition of redistribution layers or pillar bumping and filling of through glass vias.

It is a further objective of the present invention to provide a compound usable in an aqueous metal or metal alloy plating bath, preferably an acid copper or copper alloy plating bath for electrolytic deposition of copper or copper alloys, as well as said aqueous metal or metal alloy plating bath, which allows for a conform plating of a layer with an even surface, in particular without formation of any defects on said deposited layer and/or without different layer thickness within said deposited layer on the surface of the substrate and walls of the THs.

It is a further objective of the present invention to provide a compound usable in an aqueous metal plating bath, preferably a copper or copper alloy plating bath for electrolytic deposition of copper or copper alloys, as well as said aqueous metal or metal alloy plating bath, wherein said polymer can be efficiently synthesized and/or wherein the concentration of said polymer is reduced to provide an economic deposition process with a minimal resource footprint.

It is a further objective of the present invention to provide a compound usable in an aqueous metal plating bath, preferably a copper or copper alloy plating bath for electrolytic deposition of copper or copper alloys, as well as said aqueous metal or metal alloy plating bath, which allow for a conformal metal deposition onto the walls of THs with high aspect ratios (width to depth).

### Summary of the Invention

These objectives are solved according to a first aspect by a biuret-based quaternized polymer.

These objectives are also solved according to a second aspect by a biuret-based quaternized monomer.

These objectives are also solved according to a third aspect by an aqueous metal or metal alloy plating bath comprising at least one source of metal ions and at least one biuret-based quaternized polymer according to the first aspect, preferably in a copper plating bath for electrolytic deposition of copper or copper alloys.

These objectives are also solved according to a fourth aspect by a method for deposition of metal or metal alloy onto a substrate.

These objectives are also solved according to a fifth aspect by a method of synthesizing a biuret-based quaternized polymer.

By the first to fifth aspect, various recessed structures, such as through-holes (THs'), blind micro vias (BMVs'), through silicon vias (TSVs') and through glass vias can be coated with metal or metal alloys, preferably with copper or copper alloys deposited from the aqueous copper plating bath according to the present invention. The deposited layers have a uniform thickness, do not comprise plating defects and are conformal plated onto the surface of the substrate and onto the surface of the recessed structures of the substrate, e.g. onto the walls of a through hole.

It is an advantage of the present invention that very smooth and even metal or metal alloy deposits, in particular copper and copper alloy deposits, can be formed without any (substantial) defects on the surfaces of said deposits.

The invention further provides a plating bath for the deposition of decorative bright and conformal surfaces, wherein the bath mediates good throwing power and excellent micro-levelling characteristics.

The aqueous metal or metal alloy, preferably copper or copper alloy, plating bath according to the present invention mediates good throwing power and allows for the advantageous deposition of metal layers within recessed structures, such as through-holes (THs) wherein the walls of the THs are plated, in particular when said recessed structures have high aspect ratios e.g. aspect ratio for TH of 1:5, 1:8 or higher.

The aqueous metal or metal alloy, preferably copper or copper alloy, plating bath according to the present invention can also be used for filling of THs and BMVs.

### Detailed Description of the Invention

Percentages throughout this specification are weight-percentages (wt.-%) unless stated otherwise. Yields are given in a percentage of the theoretical yield. Concentrations given in this specification refer to the volume or mass of the entire solutions unless stated otherwise. The terms "deposition" and "plating" are used interchangeably throughout this specification. Also, the terms "layer" and "deposit" are used interchangeably throughout this specification.

In so far as the term "alkyl" is used in this description and in the claims, it refers to a hydrocarbon radical with the general chemical formula C_{w}H_{2w+1}, w being an integer from 1 to about 50. Alkyl residues according to the present invention can be linear and/or branched. In one embodiment, the alkyl residues are unsaturated comprising double or triple bonds between adjacent carbon atoms forming the alkyl residues. If the alkyl residues are saturated the corresponding general chemical formula has to be adjusted accordingly. C₁-C₈-alkyl for example includes, among others, methyl, ethyl, n-propyl, iso-propyl, n-butyl, iso-butyl, tert-butyl, n-pentyl, iso-pentyl, sec-pentyl, tert-pentyl, neo-pentyl, hexyl, heptyl and octyl. Alkyl can be substituted by replacing an H-atom in each case by a functional group, for example alkoxy, hydroxy, halides such as fluorine, chlorine, bromine, carbonyl, carboxyl, carboxylic acid esters and so forth.

In so far as the term "alkylene" is used in this description and in the claims, it refers to a hydrocarbon diradical with the general chemical formula CᵥH₂ᵥ, v being an integer from 1 to about 50. Alkylene residues according to the present invention can be linear and/or branched. In one embodiment, the alkylene residue are unsaturated comprising double or triple bonds between adjacent carbon atoms forming the alkyl residues. If the alkylene residues are saturated the corresponding general chemical formula has to be adjusted accordingly. C₁-C₄-alkylene for example includes, among others, methane-1,1-diyl, ethane-1,2-diyl (also referred in the art and herein as ethylene or 1,2-ethylene), ethane-1,1-diyl, propane-1 ,3-diyl (also referred in the art and herein as propylene or 1,3-propylene), propane-1,2-diyl, propane-1,1-diyl, butane-1,4-diyl, butane-1,3-diyl, butane-1,2-diyl, butane-1,1-diyl, butane-2,3-diyl. Alkylene can be substituted by replacing an H-atom in each case by a functional group, for example alkoxy, hydroxy, halides such as fluorine, chlorine, bromine, carbonyl, carboxyl, carboxylic acid esters and so forth.

In so far as the term "aryl" is used in this description and in the claims, it refers to ring-shaped aromatic hydrocarbon radical, for example phenyl or naphthyl, where individual ring carbon atoms can be replaced by N, O and/or S, for example benzothiazolyl. Furthermore, aryl can be substituted by replacing an H-atom in each case by a functional group, for example alkoxy, hydroxy, halides such as fluorine, chlorine, bromine, carbonyl, carboxyl, carboxylic acid esters and so forth. In analogy to alkyl and alkylene, arylene is to be understood as ring-shaped aromatic hydrocarbon diradical with the same provisions as stated for aryl.

In so far as the term "aralkyl" is used in this description and in the claims, it refers to a hydrocarbon radical consisting of an alkyl and an aryl radical such as benzyl and toluyl.

The terms "polymeric" and "polymer" have to be understood in a broad sense in connection with the present invention. They comprise any compound according to formula I of the first aspect of the present invention. In particular, the terms "polymeric" and "polymer" comprise any compounds which have been formed by reaction of at least one monomer compound of formulae (Mo1), (Mo2) and/or (Mo3) and at least one compound (B1), (B2), (B3) and/or (B4) according to the fifth aspect. The term "polymer" does comprise compounds which are typically designated as oligomers. The bonding sites in some chemical formulae are emphasised by a wavy line as is customary in the art.

According to the first aspect, the present inventions is directed to a biuret-based quaternized polymer comprising a polymeric building block according to formula (I) 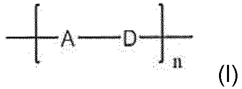 wherein A represents at least one unit of the following formulae (A1), (A2) and (A3) 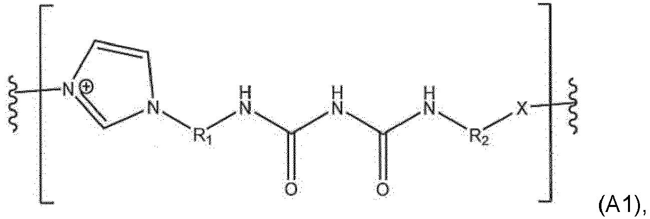 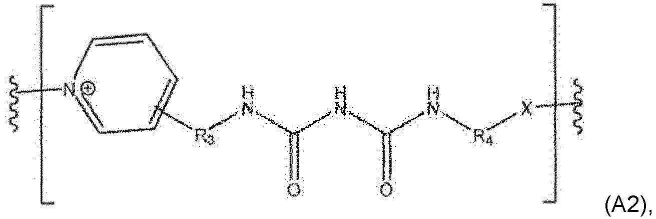 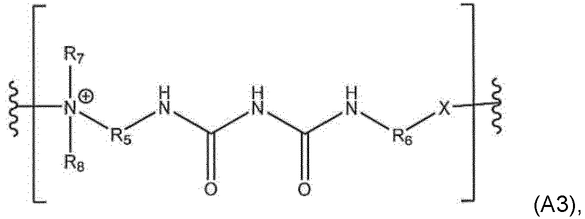
wherein R₁, R₂, R₄, R₅ and R₆ are independently selected from the group consisting of C₂-C₁₂-alkanediyl and -(CH₂)_{c}-[CH(Ra₆)-CH₂-O]_{d}-(CH₂)ₑ-, wherein c is an integer ranging from 0 to 3; wherein d is an integer ranging from 1 to 100; wherein e is an integer ranging from 1 to 3; wherein Ra₆ is independently selected from the group consisting of hydrogen, alkyl, aryl, aralkyl, alkanediyl, arenediyl and -(CH₂)_{f}-[CH(Ra₇)-CH₂-O]_{g}-(CH₂)ₕ-, wherein f is an integer ranging from 0 to 3; wherein g is an integer ranging from 1 to 100; wherein h is an integer ranging from 1 to 3; wherein Ra₇ is independently selected from the group consisting of hydrogen, alkyl, aryl and aralkyl;
wherein R₃ is selected from the group consisting of C₁-C₁₂-alkanediyl and -(CH₂)_{c}-[CH(Ra₆)-CH₂-O]_{d}-(CH₂)ₑ-, wherein c is an integer ranging from 0 to 3; wherein d is an integer ranging from 1 to 100; wherein e is an integer ranging from 1 to 3; wherein Ra₆ is independently selected from the group consisting of hydrogen, alkyl, aryl, aralkyl, alkanediyl, arenediyl and -(CH₂)_{f}-[CH(Ra₇)-CH₂-O]_{g}-(CH₂)ₕ-, wherein f is an integer ranging from 0 to 3; wherein g is an integer ranging from 1 to 100; wherein h is an integer ranging from 1 to 3; wherein Ra₇ is independently selected from the group consisting of hydrogen, alkyl, aryl and aralkyl;
wherein X is independently selected from the group consisting of 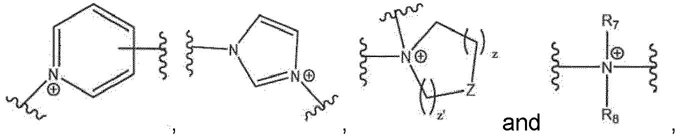
wherein Z is independently selected from the group consisting of -CH₂-, O, S; wherein z and z' are integers independently ranging from 1 to 6, wherein R₇ and R₈ are independently selected from the group consisting of hydrogen, alkyl, aryl, aralkyl and -CH₂-CH₂-(OCH₂CH₂)_{y}-OH, wherein y is an integer from 1 to 4;
wherein in case X is pyridinium, R₁, R₂, R₄, R₅ and R₆ can also be -CH₂-;
wherein n is an integer ranging from 1 to 40;
wherein D is selected from the group consisting of -CH₂-CH(OH)-CH₂-, -CH₂-CH(SH)-CH₂-, -(CH₂)ᵢ-[CH(Rd₁)-CH₂-O]ⱼ-(CH₂)ₖ- and -CH₂-CH(OH)-(CH₂)ₗ-[CH(Rd₂)-CH₂-O]ₘ-(CH₂)ₚ-CH(OH)-CH₂-, wherein i is an integer ranging from 0 to 3; wherein j is an integer ranging from 1 to 100; wherein k is an integer ranging from 1 to 3; wherein Rd₁ is independently selected from the group consisting of hydrogen, alkyl, aryl and aralkyl; wherein I is an integer ranging from 1 to 3; wherein m is an integer ranging from 1 to 100; wherein p is an integer ranging from 1 to 3; wherein Rd₂ is independently selected from the group consisting of hydrogen, alkyl, aryl and aralkyl,
wherein the individual units A may be the same or different, and
wherein the individual units D may be the same or different.

Preferably, all units A of the polymeric block according to formula (I) are comprised by the structure according to formula (A1).

Preferably, all units A of the polymeric block according to formula (I) are comprised by the structure according to formula (A2).

Preferably, all units A of the polymeric block according to formula (I) are comprised by the structure according to formula (A3).

Preferably, the units A of the polymeric block according to formula (I) are comprised by the structure according to formula (A1), (A2) and/or (A3).

Preferably, all units D of the polymeric block according to formula (I) are comprised by the group -CH₂-CH(OH)-CH₂-.

Preferably, all units D of the polymeric block according to formula (I) are comprised by the group -CH₂-CH(SH)-CH₂-.

Preferably, all units D of the polymeric block according to formula (I) are comprised by the group -(CH₂)ᵢ-[CH(Rdi)-CH₂-O]ⱼ-(CH₂)ₖ-.

Preferably, all units D of the polymeric block according to formula (I) of the polymeric block according to formula (I) are comprised by the group -CH₂-CH(OH)-(CH₂)ₗ-[CH(Rd₂)-CH₂-O]ₘ-(CH₂)ₚ-CH(OH)-CH₂-.

Preferably, the units D of the polymeric block according to formula (I) are comprised by the groups -CH₂-CH(OH)-CH₂-, -CH₂-CH(SH)-CH₂-, -(CH₂)ᵢ-[CH(Rd₁)-CH₂-O]ⱼ-(CH₂)ₖ- and/or -CH₂-CH(OH)-(CH₂)ₗ-[CH(Rd₂)-CH₂-O]ₘ-(CH₂)ₚ-CH(OH)-CH₂-. Preferably, R₃ is bound to the pyridyl residue according to formula A2 in meta- or para-position.

Preferably, when X is selected as pyridyl, R₄ is bound to said pyridyl residue in meta- or para-position.

In a preferred embodiment X is independently selected from the group consisting of

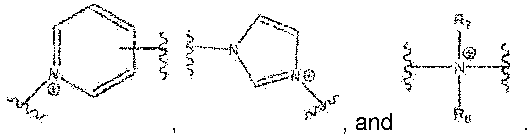

In a preferred embodiment at least one A is selected as a unit represented by formula A1, preferably wherein all A are selected as a unit represented by formula A1, wherein X is selected as

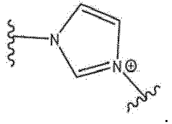

In a preferred embodiment at least one A is selected as a unit represented by formula A2, preferably wherein all A are selected as a unit represented by formula A2, wherein X is selected as

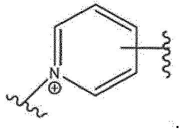

Preferably, R₄ is bound to said pyridyl residue in meta- or para-position.

In a preferred embodiment at least one A is selected as a unit represented by formula A3, preferably wherein all A are selected as a unit represented by formula A3, wherein X is selected as

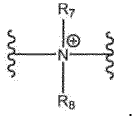

In a preferred embodiment in the polymer of formula (I) at least one A is selected as a unit represented by formula (A1-1) 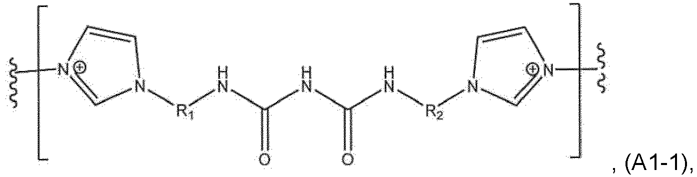 wherein preferably, in the polymer of formula (I) all units A are selected to be units represented by formula (A1-1).

Preferably, when in the polymer of formula (I) at least one A is selected as a unit represented by formula (A1-1), the integer n ranges from 2 to 20, more preferably from 3 to 15, and even more preferably from 4 to 13.

Preferably, when in the polymer of formula (I) at least one A is selected as a unit represented by formula (A1-1), R₁ and R₂ are selected as propylene (-CH₂-CH₂-CH₂)-. This allows for an easier synthesis of the polymer by an also easier synthesis of the respective starting monomer.

In a preferred embodiment in the polymer of formula (I) at least one A is selected as a unit represented by formula (A2-1) or formula (A2-2) 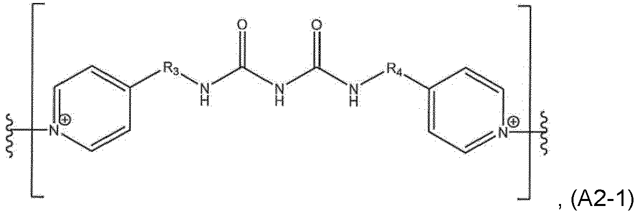 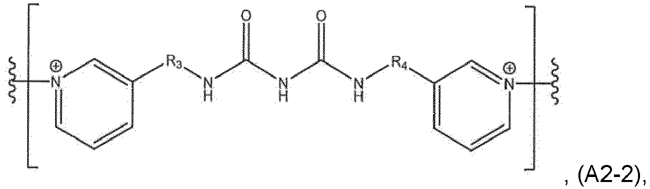 wherein preferably in the polymer of formula (I) all units A are selected to be units represented by either formula (A2-1) or formula (A2-2).

Preferably, when in the polymer of formula (I) at least one A is selected as a unit represented by formula (A2-1) or (A2-2), the integer n ranges from 2 to 20, more preferably from 3 to 15, and even more preferably from 4 to 13. This allows for enhanced levelling properties of the respective pyridinium compounds in copper plating baths.

Preferably, when in the polymer of formula (I) at least one A is selected as a unit represented by formula (A2-1) or (A2-2), R₃ and R₄ are selected as methylene (-CH₂-). This allows for an easier synthesis of the polymer by an also easier synthesis of the respective starting monomer.

In a preferred embodiment in the polymer of formula (I) at least one A is selected as a unit represented by formula (A3-1) 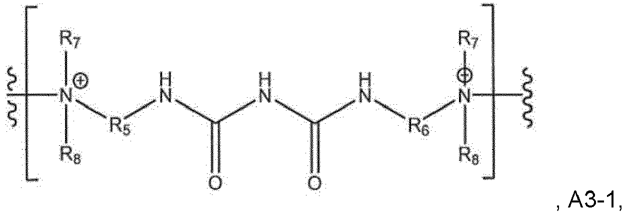 wherein preferably, in the polymer of formula (I) all units A are selected to be units represented by formula (A3-1).

Preferably, when in the polymer of formula (I) at least one A is selected as a unit represented by formula (A3-1), the integer n ranges from 2 to 20, more preferably from 3 to 15, and even more preferably from 4 to 13. This allows for enhanced levelling properties of the respective quaternized biuret compounds in copper plating baths.

Preferably, when in the polymer of formula (I) at least one A is selected as a unit represented by formula (A3) or (A3-1), R₅ and R₆ are selected as ethylene (-CH₂-CH₂-) and/or propylene (-CH₂-CH₂-CH₂-). Preferably, R₇ and R₈ are lower-alkyl-moieties, more preferably methyl, ethyl, propyl, and/or aralkyl.

In a preferred embodiment integer n ranges from 2 to 20, more preferably from 3 to 15 and even more preferably from 4 to 13. The preferred selection for integer n result in enhanced levelling properties.

In a preferred embodiment R₁ and R₂ are independently selected from C₂-C₁₂-alkanediyl, preferably C₂-C₆-alkanediyl, more preferably propylene (-CH₂-CH₂-CH₂-). Due to the reduced length of R₁ and R₂ being preferably selected as propylene (-CH₂-CH₂-CH₂-), the synthesis can be simplified.

In a preferred embodiment R₃ and R₄ are independently selected from C₂-C₁₂-alkanediyl, preferably C₂-C₆-alkanediyl, preferably methylene (-CH₂-).

In a preferred embodiment R₅ and R₆ are independently selected from C₂-C₁₂-alkanediyl, preferably C₂-C₆-alkanediyl, more preferably ethylene (-CH₂-CH₂-) and/or propylene (-CH₂-CH₂-CH₂-). Due to the reduced length of R⁵ and R⁶ being preferably selected as propylene (-CH₂-CH₂-CH₂-), the synthesis can be simplified.

In a preferred embodiment R₇ and R₈ are lower alkyl-moieties, preferably methyl, ethyl, propyl, and/or aralkyl.

In a preferred embodiment D is selected from the group consisting of -CH₂-CH(OH)-CH₂-, -(CH₂)ᵢ-[CH(Rd₁)-CH₂-O]ⱼ-(CH₂)ₖ- and -CH₂-CH(OH)-(CH₂)ₗ-[CH(Rd₂)-CH₂-O]ₘ-(CH₂)ₚ-CH(OH)-CH₂-, wherein i is an integer ranging from 0 to 3; wherein j is an integer ranging from 1 to 100; wherein k is an integer ranging from 1 to 3; wherein Rd₁ is independently selected from the group consisting of hydrogen, alkyl, aryl and aralkyl, preferably from the group consisting of hydrogen, C₁-C₄-alkyl and phenyl, more preferably from the group consisting of hydrogen and C₁-C₄-alkyl, and most preferably from the group consisting of hydrogen and methyl; wherein m is an integer ranging from 1 to 100; wherein p is an integer ranging from 1 to 3; wherein Rd₂ is independently selected from the group consisting of hydrogen, alkyl, aryl and aralkyl, preferably from the group consisting of hydrogen, C₁-C₄-alkyl and phenyl, more preferably from the group consisting of hydrogen and C₁-C₄-alkyl, and even more preferably from the group consisting of hydrogen and methyl.

In a preferred embodiment D is selected as -(CH₂)ᵢ-[CH(Rd₁)-CH₂-O]ⱼ-(CH₂)ₖ, wherein each i is 2 or 3; wherein each j is an integer ranging from 1 to 25, wherein each k is an integer ranging from 2 to 3 and wherein each Rd₁ is independently selected from the group consisting of hydrogen and C₁-C₄-alkyl, preferably from hydrogen and methyl.

In a preferred embodiment D is selected from the group consisting of -CH₂-CH₂-O-CH₂-CH₂-; -CH₂-CH₂-O-CH₂-CH₂-O-CH₂-CH₂- and -CH₂-CH₂-O-CH₂-CH₂-O-CH₂-CH₂-O-CH₂-CH₂-.

In a preferred embodiment the average molecular mass weight (MW) of the polymers ranges from 580 to 10000 g/mol, preferably from 1000 to 7500 g/mol and more preferably from 1000 to 6000 g/mol, even more preferably from 1500 to 5000 g/mol. The preferred average molecular mass weight (MW) of the polymers results in enhanced levelling properties in copper plating baths of the respective polymers.

In a preferred embodiment, all terminal tertiary amino groups of A, including nitrogen atoms bound in a pyridine and/or imdidazole ring, present in the polymers of formula (I) according to the present invention, are converted into the respective quaternary ammonium groups in accordance with the desired properties by using an organic monohalide or organic monopseudohalide such as benzyl chloride, alkyl chloride like 1-chlorohexane or ethoxylated or propoxylated alkylhalides, epichlorohydrine, 2-(chloromethyl)thiirane, propargyl chloride or allyl chloride or their corresponding bromides and mesylates, or by using an appropriate mineral acid, such as hydrochloric acid, hydrobromic acid or sulfuric acid.

In a preferred embodiment the polymers do not contain any organically bound halogen, preferably the polymers do not contain a covalently bound C-Cl moiety.

The biuret-based quaternized polymers according to the present invention can be purified if necessary, by any means known to those skilled in the art. These methods include precipitation of products or of undesired impurities, chromatography, extraction, flotation or a combination of any of the aforementioned. The purification method to be used depends on the physical properties of the respective compounds present in the reaction mixture and has to be chosen for each individual case. In a preferred embodiment of the present invention, the purification comprises at least one of the following methods selected from the group consisting of extraction, chromatographic and precipitation. Alternatively, the biuret-based quaternized polymers can be used without further purification.

According to a second aspect, the present invention is directed to a biuret-based quaternized monomer comprising a compound according to formula (Mo1) or (Mo2) 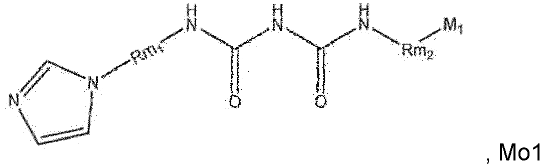 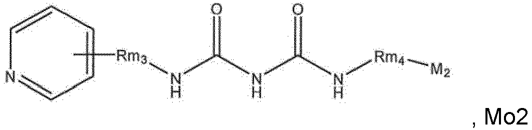
wherein Rm₁, Rm₂, and Rm₄ are independently selected from the group consisting of C₂-C₁₂-alkanediyl and -(CH₂)_{α}-[CH(Ra₆)-CH₂-O]_{β}-(CH₂)_{χ}- wherein α is an integer ranging from 0 to 3; wherein β is an integer ranging from 1 to 100; wherein _{X} is an integer ranging from 1 to 3; wherein Ra₆ is independently selected from the group consisting of hydrogen, alkyl, aryl, aralkyl, alkanediyl, arenediyl and -(CH₂)_{f}-[CH(Ra₇)-CH₂-O]_{g}-(CH₂)ₕ-, wherein f is an integer ranging from 0 to 3; wherein g is an integer ranging from 1 to 100; wherein h is an integer ranging from 1 to 3; wherein Ra₇ is independently selected from the group consisting of hydrogen, alkyl, aryl and aralkyl;
wherein Rm₃ is selected from the group consisting of C₁-C₁₂-alkanediyl and -(CH₂)_{α}-[CH(Ra₆)-CH₂-O]_{β}-(CH₂)_{X}- wherein α is an integer ranging from 0 to 3; wherein β is an integer ranging from 1 to 100; wherein _{X} is an integer ranging from 1 to 3; wherein Ra₆ is independently selected from the group consisting of hydrogen, alkyl, aryl, aralkyl, alkanediyl, arenediyl and -(CH₂)_{f}-[CH(Ra₇)-CH₂-O]_{g}-(CH₂)ₕ-, wherein f is an integer ranging from 0 to 3; wherein g is an integer ranging from 1 to 100; wherein h is an integer ranging from 1 to 3; wherein Ra₇ is independently selected from the group consisting of hydrogen, alkyl, aryl and aralkyl;
wherein M₁ and M₂ are independently selected from the group consisting of 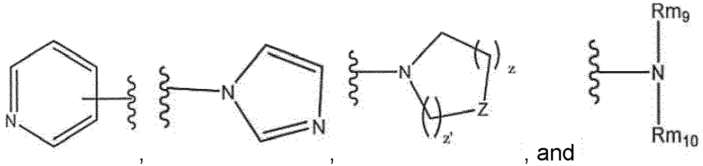
wherein Z is selected from -CH₂-, O, S; wherein z and z' are integers independently ranging from 1 to 6, wherein Rm₉ and Rm₁₀ are independently selected from the group consisting of alkyl, aryl, aralkyl and -CH₂-CH₂-(OCH₂CH₂)_{ψ}-OH wherein _{ψ} is an integer from 1 to 4,

Preferably, M1 and M2 are independently selected from the group consisting of

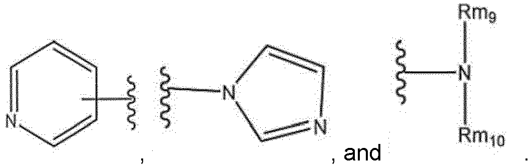

Preferably, Rm₁, Rm₂ and Rm₄, are selected as C₂-C₁₂-alkanediyl, preferably as C₂-C₆-alkanediyl, more preferably as -(CH₂)-(CH₂)-(CH₂)-, and/or wherein Rm₃ is selected as C₁-C₁₂-alkanediyl, preferably as C₁-C₄-alkanediylm more preferably as - (CH₂)-(CH₂)- or -(CH₂)-.

According to a third aspect, the present invention is directed to a metal or metal alloy plating bath comprising at least one source of metal ions which is characterised in that it comprises at least one biuret-based quaternized polymer according to the first aspect, wherein preferably the at least one source of metal ions is a source of copper ions.

The metal or metal alloy plating bath according to the third aspect comprises at least one source of metal ions and is characterised in that it further comprises at least one biuret-based quaternized polymer. If only one source of reducible metal ions is present in the plating bath according to the present invention only this metal will be deposited when using the metal plating bath. If two or more sources of reducible metal ions are present therein an alloy will be deposited. Other sources of reducible metal ions are e.g. sources of zinc ions, tin ions and silver ions. Preferably, the at least one source of metal ions is a source of copper ions. More preferably, 99 weight percent or more of the reducible metal ions are copper ions.

More preferably, the aqueous copper plating bath according to the invention comprises a source of copper ions and an acid and is characterised in that it comprises at least one biuret-based quaternized polymer according to the first aspect.

The concentration of the at least one biuret-based quaternized polymer in the metal or metal alloy plating bath, preferably aqueous copper plating bath, preferably ranges from 0.1 mg/L to 1000 mg/L, more preferably from 0.5 mg/L to 500 mg/L, even more preferably from 1 mg/L to 400 mg/L, most preferably from 1 mg/L to 200 mg/L..

The metal or metal alloy plating bath according to the invention is an aqueous solution. The term "aqueous solution" means that the prevailing liquid medium, which is the solvent in the solution, is water. Further liquids, as for example alcohols, other polar organic liquids, for example acetonitrile, and/or other organic liquids, for example dioxane, may be added.

The aqueous metal or metal alloy plating bath according to the invention may be prepared by dissolving all components in aqueous liquid medium, preferably in water.

The metal or metal alloy plating bath contains a source of metal ions which can be any water-soluble metal salt. The preferred aqueous copper plating bath contains at least one source of copper ions which is preferably selected from the group consisting of copper sulphate and copper alkyl sulphonates such as copper methane sulphonate. Further copper ion sources can be copper oxide and copper carbonate. The copper ion concentration in the aqueous copper plating bath preferably ranges from 10 g/L to 70 g/L.

The preferred metal or metal alloy plating bath further contains at least one acid which is preferably selected from the group consisting of sulphuric acid, fluoroboric acid, phosphoric acid and methane sulphonic acid and is preferably added in a concentration of 10 g/L to 400 g/L, more preferably from 20 g/L to 300 g/L.

The preferred metal or metal alloy plating bath composition is an acid metal or metal alloy plating bath composition, preferably has a pH value of ≤ 2, more preferably of ≤ 1.

The preferred metal or metal alloy plating bath preferably further contains at least one accelerator-brightener additive which is selected from the group consisting of organic thiol-, sulphide-, disulphide- and polysulphide-compounds. Preferred accelerator-brightener additives are selected from the group consisting of 3-(benzthiazolyl-2-thio)-propylsulphonic-acid, 3-mercaptopropan-1-sulphonic acid, ethylendithiodipropylsulphonic-acid, bis-(p-sulphophenyl)-disulphide, bis-(ω-sulphobutyl)-disulphide, bis-(ω-sulphohydroxypropyl)-disulphide, bis-(w-sulphopropyl)-disulphide, bis-(ω-sulphopropyl)-sulphide, methyl-(ω-sulphopropyl)-disulphide, methyl-(ω-sulfopropyl)-trisulphide, O-ethyl-dithiocarbonic-acid-S-(w-sulphopropyl)-ester, thioglycol-acid, thiophosphoric-acid-O-ethyl-bis-(ω-sulphopropyl)-ester, 3-N,N-dimethylaminodithiocarbamoyl-1-propanesulphonic acid, 3,3'-thiobis(1-propanesulphonic acid), thiophosphoric-acid-tris-(ω-sulphopropyl)-ester and their corresponding salts. The concentration of all accelerator-brightener additives optionally present in the metal or metal alloy plating bath compositions preferably ranges from 0.01 mg/L to 100 mg/L, more preferably from 0.05 mg/L to 50 mg/L.

The preferred metal or metal alloy plating bath optionally contains in addition to the biuret-based quaternized polymer at least one further carrier-suppressor additive which is preferably selected from the group consisting of polyvinylalcohol, carboxymethylcellulose, polyethylenglycol, polypropyleneglycol, stearic acid polyglycolester, alkoxylated naphtoles, oleic acid polyglycolester, stearylalcoholpolyglycolether, nonylphenolpolyglycolether, octanolpolyalkyleneglycolether, octanediol-bis-(polyalkyleneglycolether), poly(ethylenglycol-ran-propylenglycol), poly(ethylenglycol)-block-poly(propylenglycol)-block-poly(ethylenglycol), and poly(propylenglycol)-blockpoly(ethylenglycol)-block-poly(propylenglycol). More preferably, the optional carrier-suppressor additive is selected from the group consisting of polyethylenglycol, polypropyleneglycol, poly(ethylenglycol-ran-propylenglycol), poly(ethylenglycol)-blockpoly(propyleneglycol)-block-poly(ethylenglycol) and poly(propyleneglycol)-blockpoly(ethylenglycol)-block-poly(propylenglycol). The concentration of said optional carrier-suppressor additive preferably ranges from 0.005 g/L to 20 g/L, more preferably from 0.01 g/L to 5 g/L.

Optionally, the preferred metal or metal alloy plating bath contains in addition to the inventive biuret-based quaternized polymer at least one further leveller additive selected from the group consisting of nitrogen containing organic compounds such as polyethyleneimine, alkoxylated polyethyleneimine, alkoxylated lactames and polymers thereof, diethylenetriamine and hexamethylenetetramine, polyethylenimine bearing peptides, polyethylenimine bearing amino acids, polyvinylalcohol bearing peptides, polyvinylalcohol bearing amino acids, polyalkyleneglycol bearing peptides, polyalkyleneglycol bearing amino acids, aminoalkylene bearing pyrrols and aminoalkylene bearing pyridines, organic dyes such as Janus Green B, Bismarck Brown Y and Acid Violet 7, sulphur containing amino acids such as cysteine, phenazinium salts and derivatives thereof. Suitable ureyl polymers have been disclosed in EP 2735627 A1, said polyalkyleneglycol bearing amino acids and peptides are published in EP 2113587 B9 and EP 2537962 A1 teaches suitable aminoalkylene bearing pyrrols and pyridines. The preferred further leveller additive is selected from nitrogen containing organic compounds. Said optional leveller additive is added to the aqueous copper plating bath in amounts of 0.1 mg/L to 100 mg/L.

The preferred metal or metal alloy plating bath optionally further contains at least one source of halide ions, preferably chloride ions in a quantity of 20 mg/L to 200 mg/L, more preferably from 30 mg/L to 100 mg/L. Suitable sources for halide ions are for example hydrochloric acid or alkali halides such as sodium chloride.

Optionally, the preferred metal or metal alloy plating bath may contain at least one wetting agent. These wetting agents are also referred to as surfactants in the art. The at least one wetting agent may be selected from the group of non-ionic, cationic and/or anionic surfactants and is used in concentration from 0.01 to 5 wt.-%.

In one embodiment of the present invention, a redox couple, such as Fe^{2+/3+} ions, is added to the preferred metal or metal alloy plating bath. Such a redox couple is particularly useful, if reverse pulse plating is used in combination with inert anodes for copper deposition. Suitable processes for copper plating using a redox couple in combination with reverse pulse plating and inert anodes are for example disclosed in US 5,976,341 and US 6,099,711. The preferred metal or metal alloy plating bath is particularly suitable for electrolytic deposition of copper.

According to a fourth aspect, the present invention is directed to a method for deposition of metal or metal alloy onto a substrate comprising, in this order, the steps
(i) providing a substrate,
(ii) contacting the substrate with a metal or metal alloy plating bath according to the third aspect, and
(iii) applying an electrical current between the substrate and at least one anode,
and thereby depositing a metal or metal alloy on at least a portion of the substrate.

More preferably, pure copper (i.e. in the context of the present invention copper of 98 wt.-%, even more preferably of 99 wt.-%) is deposited.

The substrate is preferably selected from the group consisting of plastics used for decorative bright and conformal surfaces in automotive and white goods industry, printed circuit boards, IC substrates, circuit carriers, interconnect devices, semiconducting wafers and glass substrates. Preferred are substrates of the afore-mentioned group which have recessed structures such as through-holes (THs'), trenches, blind micro vias, through silicon vias and through glass vias. Metal or metal alloys, preferably copper or copper alloys, are then deposited, preferably conformal plated, into these recessed structures.

The metal or metal alloy plating bath according to the invention is preferably operated from 10 to 100°C for any time sufficient to deposit the desired deposit thickness. The preferred aqueous copper plating bath is preferably operated in the method according to the present invention in a temperature range of 15 °C to 50 °C, more preferably in a temperature range of 20 °C to 40 °C by applying an electrical current to the substrate and at least one anode. Preferably, a cathodic current density range of 0.05 A/dm² to 25 A/dm², more preferably of 0.05 A/dm² to 12 A/dm², and most preferably of 0.1 A/dm² to 7 A/dm² is applied.

The metal or metal alloy plating bath according to the present invention can be used for DC plating and reverse pulse plating. Both inert and soluble anodes can be utilised when depositing metal or metal alloy such as copper from the plating bath according to the present invention.

The aqueous metal or metal alloy plating bath can be either used in conventional vertical or horizontal plating equipment. The substrate or at least a portion of its surface may be contacted with the aqueous metal or metal alloy plating bath according to the invention by means of spraying, wiping, dipping, immersing or by other suitable means. Thereby, a metal or metal alloy, preferably copper or copper alloy, layer is obtained on at least a portion of the surface of the substrate.

It is preferential to agitate the aqueous metal or metal alloy plating bath during the plating process, i.e. the deposition of metal or metal alloy. Agitation may be accomplished for example by mechanical movement of the inventive aqueous copper plating bath like shaking, stirring or continuously pumping of the liquids or by ultrasonic treatment, elevated temperatures or gas feeds (such as purging the plating bath with air or an inert gas such as argon or nitrogen). The agitation can also be conducted by moving the substrate within the bath.

The process according to the invention may comprise further cleaning, (micro-)etching, reducing, rinsing and/or drying steps all of which are known in the art.

It is an advantage of the present invention that the inventive biuret-based quaternized polymer according to the first aspect may be used in a metal or metal alloy plating bath, preferably in an aqueous copper plating bath, without further levellers and/or carrier-suppressors as the inventive biuret-based quaternized polymer is dual-functional and acts as leveller and/or carrier-suppressor.

According to a fifth aspect, the present invention is directed to a method of synthesizing a biuret-based quaternized polymer according to the first aspect, wherein the method comprises providing at least one starting material represented by one of the following formulae (Mo1), (Mo2) and (Mo3) 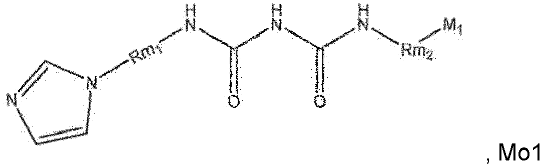 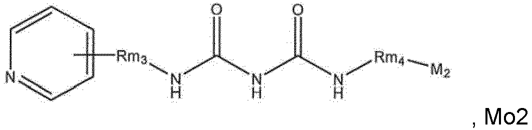 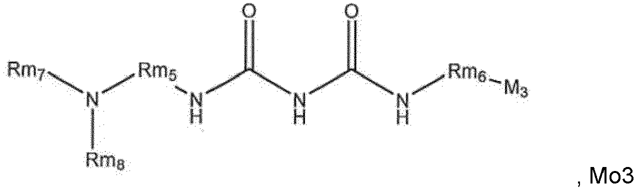
wherein Rm₁, Rm₂, Rm₄, Rm₅ and Rm₆ are independently selected from the group consisting of C₂-C₁₂-alkanediyl and -(CH₂)_{α}-[CH(Ra₆)-CH₂-O]_{β}-(CH₂)_{X}- wherein α is an integer ranging from 0 to 3; wherein β is an integer ranging from 1 to 100; wherein _{X} is an integer ranging from 1 to 3; wherein Ra₆ is independently selected from the group consisting of hydrogen, alkyl, aryl, aralkyl, alkanediyl, arenediyl and -(CH₂)_{f}-[CH(Ra₇)-CH₂-O]_{g}-(CH₂)ₕ-, wherein f is an integer ranging from 0 to 3; wherein g is an integer ranging from 1 to 100; wherein h is an integer ranging from 1 to 3; wherein Ra₇ is independently selected from the group consisting of hydrogen, alkyl, aryl and aralkyl;
wherein Rm₃ is selected from the group consisting of C₁-C₁₂-alkanediyl and -(CH₂)_{α}-[CH(Ra₆)-CH₂-O]_{β}-(CH₂)_{X}- wherein α is an integer ranging from 0 to 3; wherein β is an integer ranging from 1 to 100; wherein _{X} is an integer ranging from 1 to 3; wherein Ra₆ is independently selected from the group consisting of hydrogen, alkyl, aryl, aralkyl, alkanediyl, arenediyl and -(CH₂)_{f}-[CH(Ra₇)-CH₂-O]_{g}-(CH₂)ₕ-, wherein f is an integer ranging from 0 to 3; wherein g is an integer ranging from 1 to 100; wherein h is an integer ranging from 1 to 3; wherein Ra₇ is independently selected from the group consisting of hydrogen, alkyl, aryl and aralkyl;
wherein M₁, M₂ and M₃ is independently selected from the group consisting of 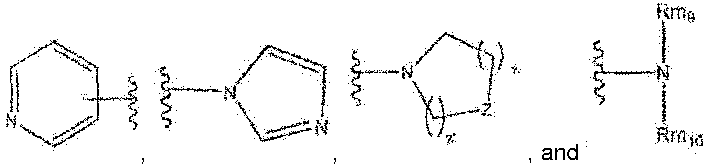
wherein Z is selected from -CH₂-, O, S; wherein z and z' are integers independently ranging from 1 to 6, wherein Rm₉ and Rm₁₀ are independently selected from the group consisting of alkyl, aryl, aralkyl and -CH₂-CH₂-(OCH₂CH₂)_{ψ}-OH wherein _{ψ} is an integer from 1 to 4,
wherein the method comprises reacting the at least one starting material represented by one of the formulae (Mo1), (Mo2) and (Mo3) with one or more of the following compounds (B1) to (B4) to obtain the biuret-based quaternized polymer, 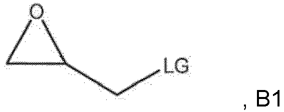 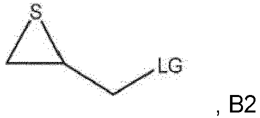 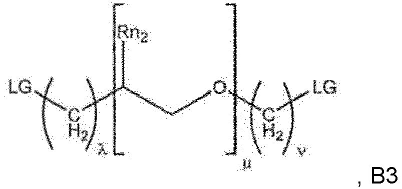 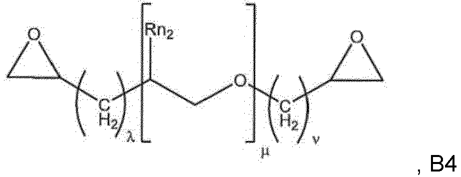
wherein LG is independently selected from the group consisting of triflate, nonaflate, alkylsulfonates, arylsulfonates and halides; wherein λ is an integer ranging from 1 to 3; wherein µ is an integer ranging from 1 to 100; wherein v is an integer ranging from 1 to 3; wherein Rn₂ is independently from each other selected from the group consisting of hydrogen, alkyl, aryl and aralkyl.

As the starting materials represented by formulae (Mo1), (Mo2) and (Mo3) form the units represented by formulae (A1), (A2) and (A3), respectively, above described preferred embodiments for the polymers naturally apply *mutatis mutandis* for the starting materials. This means for example that the preferred embodiments described hereinbefore for A1 correspond to those of Mo1 and so forth. The same applies *mutatis mutandis* for the compounds (B1) to (B4) which form the units D of the polymers.

In a preferred embodiment, the reaction of the one or more starting materials represented by formula (Mo1), (Mo2) and (Mo3) and the one or more compounds (B1) to (B4) is typically carried out in a solvent, preferably in a polar solvent, more preferably water, glycols, acetonitrile and alcohols or mixtures thereof, most preferably water.

In a preferred embodiment, the reaction temperature usually ranges from 50 to 100 °C, preferably from 60 to 90 °C, more preferably from 75 to 85 °C.

The reaction is preferably continued until all of the starting materials are consumed which can for example be detected by pH measurements using a pH sensor since the pH decreases due to the conversion of basic nitrogen atoms in e.g. the pyridine rings to the respective quaternary ammonium moieties. Once the pH value becomes constant for a certain period of time, e.g. at least 10 min, the reaction is complete and can be terminated. Alternatively, the reaction is carried out for a time of 1 to 120 h, preferably for 10 to 100 h, more preferably for 12 to 84 h.

In a preferred embodiment, the molar ratio of the total amount of substance of starting materials according to formula (Mo1), (Mo2) and (Mo3) to the total amount of substance of compounds (B1) to (B4) ranges from 1:1 to 1.5:1, preferably from 1.04:1 to 1.4:1, more preferably from 1.05:1 to 1.25:1.

In another preferred embodiment, the molar ratio of the total amount of substance of starting materials according to formula (Mo1), (Mo2) and (Mo3) to the total amount of substance of compounds (B1) to (B4) ranges from 1:1.5, preferably from 1:1.04 to 1:1.4, more preferably from 1:1.05 to 1:1.25.

In a preferred embodiment, the starting materials according to formula (Mo1), (Mo2) and (Mo3) are prepared by reacting a suitable, imidazole alkylene, pyridine alkylene or tert-amine nucleophile and biuret.

In a preferred embodiment, the obtained biuret-based quaternized polymer is purified by purification methods, preferably by chromatography or precipitation depending on the physical properties of the polymers. The person skilled in the art can determine suitable methods by routine examples.

In a preferred embodiment, the linkages between starting materials according to formulae (Mo1), (Mo2) and/or (Mo3) and the compounds (B1) to (B4) occur via one of the nitrogen atoms of the imidazole, pyridine or amine moieties in the starting materials according to formulae (Mo1), (Mo2) and/or (Mo3) and/or if present one of the nitrogen atoms in residues M₁, M₂, and M₃.

In a preferred embodiment, halide ions serving as the counter-ions of the positively charged biuret-based quaternized polymer are replaced after preparation of the polymers by anions such as hydroxide, sulfate, hydrogensulfate, carbonate, hydrogencarbonate, alkylsulfonate, preferably as methane sulfonate, aralkylsulfonate, arylsulfonate, alkylcarboxylate, aralkylcarboxylate, arylcarboxylate, phosphate, hydrogenphosphate, dihydrogenphosphate, and phosphonate. The halide ions can be for example replaced by ion-exchange over a suitable ion-exchange resin. The most suitable ion-exchange resins are basic ion-exchange resins such as Amberlyst^{®} A21.

Preferably after synthesis halide ions are replaced by adding an inorganic acid and/or an organic acid containing the desired anions to the ion exchange resin. The enrichment of halide ions in a plating bath during use can be avoided if the polymeric compounds contain anions other than halide ions.

In a preferred embodiment, the reaction is continued until all of the starting materials are consumed which preferably is detected when the pH of the reaction becomes constant for a certain period of time as measured by a pH sensor.

In a preferred embodiment, the reaction is continued for a time of 1 to 120 h, preferably for 10 to 100 h, more preferably for 12 to 84 h.

The invention will now be illustrated by reference to the following non-limiting examples.

### Examples

¹H-NMR spectra were recorded at 400 MHz with a spectrum offset of 4300 Hz, a sweep width of 9542 Hz at 25 °C (X, NMR System Bruker Ascend 400). The solvent used was d⁶-DMSO unless stated otherwise.

¹³C-NMR spectra were recorded at 100 MHz.

The weight average molecular mass M_{W} of the biuret-based quaternized polymer was determined by gel permeation chromatography (GPC) using a GPC apparatus from WGE-Dr. Bures equipped with a molecular weight analyzer BI-MwA from Brookhaven, a TSK Oligo +3000 column, and Pullulan and PEG standards with Mw = 400 to 22000 g/mol. The solvent used was Millipore water with 0.5 % acetic acid and 0.1 M Na₂SO₄. Conc. is used herein as abbreviation for concentration.

### 1. Synthesis of 1,3-Bis(3-(1H-imidazol-1-yl)propyl)biuret (monomer Mo1)

58.29 g (565 mmol) Biuret was suspended in 285 mL n-butanol and heated to 120°C. To this suspension, 156 g (1244 mmol) 1-(3-aminopropyl)-imidazole was added within 30 minutes, resulting in a color homogeneous reaction solution after 10 minutes. After the addition was completed, the reaction mixture was stirred for another 22 hours at 120°C (formation of a yellowish solution) and after the formation of ammonia was completed, another 285 mL n-butanol was added to the reaction mixture at 120°C and the reaction mixture was subsequently cooled to 50°C.

Subsequently, a few crystals of 1,3-bis(3-(1H-imidazol-1-yl)propyl)biuret were added as seed crystals and the reaction mixture was stirred at 50°C until turbidity appeared. When cloudiness occurred, the reaction mixture was cooled down to 25°C and stirred overnight. The reaction mixture precipitated as white crystals and was sucked off via a G3 frit. The resulting crystallizate was washed twice with 108 mL n-butanol and twice with 160 mL diethyl ether and then dried in a vacuum at 50°C. 124.88 g (69.1% yield) of a white crystallizate was obtained.

¹H-NMR (d⁶-DMSO; 400 MHz): δ 7.62 (s; 2H); 7.17 (s; 2H); 6.875 (s; 2H); 3.96 (t, ³J = 4 Hz; 4H); 2.18 (t; ³J = 4 Hz; 4H); 3.055 (dd; ³J = 6 Hz; ⁴J = 4Hz; 4 H); 1.96 (q; ³J = 4 Hz; 4H).

¹³C-NMR (d⁶-DMSO; 100 MHz): δ 153.61; 137.15; 128.29; 119.19; 43.83; 36.24; 31.06.

### 2. Synthesis of 1,3-Bis((pyridin-3-yl)methyl)biuret (Monomer Mo2)

4.52 g (43.8 mmol) of biuret were suspended in 20 mL n-butanol and heated to 120°C. To this suspension 9.57 g (88 mmol) 3-aminomethylpyridine was added within 20 to 30 minutes and stirred at 120°C for another 18 hours. The reaction mixture was then cooled down to 25°C and the resulting suspension was left to stand overnight for crystallization. A further 20 mL n-butanol was added to the resulting white slurry and the resulting solid was filtered off via a G3 frit and washed twice with 10 mL n-butanol each and then with 20 mL diethyl ether each. The white solid was then dried in a vacuum. 9.90 g (79% yield) of a white crystallizate were obtained.

¹H-NMR (d⁶-DMSO; 400 MHz): δ 7.465 (dd; J= 4Hz; 2H); 7.88 (t; ³J = 8 Hz; 2H); 7.695 (dt; ³J = 4 Hz; 2H); 7,355 (dd, ³J = 8 Hz; 2H); 4.45 (s; 4H).

¹³C-NMR (d⁶-DMSO; 100 MHz): δ 154.5; 148.7; 147.3; 136.6; 135.5; 123.0; 45.0.

### 3. Synthesis of 1,3-Bis((pyridin-4-yl)methyl)biuret (Monomer Mo2-b)

10.84 g (105 mmol) of biuret were suspended in 53 mL n-butanol and heated to 120°C. To this suspension 25.5 g (231 mmol) 4-aminomethylpyridine was added within 20 to 30 minutes and stirred at 120°C for another 14 hours. The reaction mixture was then cooled down to 25°C and the resulting yellowish suspension was left to stand overnight for crystallization. A further 20 mL n-butanol was added to the resulting yellow slurry and the resulting solid was filtered off via a G3 frit and washed twice with 20 mL n-butanol each and then with 30 mL diethyl ether each. The white solid was then dried in a vacuum (12 mbar) at 60°C. 20.77 g (69.2% yield) of a white crystallizate was obtained.

¹H-NMR (d⁶-DMSO; 400 MHz): δ 9.06 (s; 1H); 8.50 (d; ³J = 4 Hz; 4H); 7.90 (s; 2H); 7.255 (d; ³J = 4 Hz; 4H); 4.345 (s; 4H).

¹³C-NMR (d⁶-DMSO; 100 MHz): δ 154.65; 149.56; 148.62; 121.94; 41.62.

### 4. Synthesis of N,N-bis(3-dimethylaminopropyl)biuret (Monomer Mo3)

140 g (1358 mmol) of biuret were suspended in 400 mL n-butanol. To this suspension 280 g (2716 mmol) N,N-dimethylaminopropylamine was added and after the addition was completed, the reaction mixture was heated to 120°C (reflux) for 67 hours. After the ammonia development was finished, a yellowish solution was available. Afterwards the excess solvent was removed under vacuum. The residue obtained was mixed three times with 100 mL of water each time and the water was removed again in vacuum (azeotropic removal of n-butanol traces). 344.4 g (93% yield) of a yellow liquid was obtained.

¹H-NMR (d⁶-DMSO; 400 MHz): δ 8.57 (s; 1H); 7.38 (s; 1H); 3.085 (dd, ³J = 4 Hz; 4H); 2.18 (t; ³J = 4 Hz; 4H); 2.08 (s; 12 H); 1.52 (q; ³J = 4 Hz; 4H).

¹³C-NMR (d⁶-DMSO; 100 MHz): δ 154.0; 55.78; 44.65; 36.60; 26.84.

### 5. Preparation Example 1 ([1,3-bis(3-(1H-imidazol-1-yl)propyl)biuret]-[triethylene glycol]-polymer)

11.75 g (36.4 mmol) of 1,3-bis(3-(1H-imidazol-1-yl)propyl)biuret was suspended in 20 mL of water and the suspension was heated to 80°C. To the yellow turbid solution 8.81 g (27.3 mmol) triethylene glycol dimesylate was added within 20 minutes and the reaction mixture was stirred at 80°C for another 16 hours. The reaction mixture was then cooled down to 25°C. The resulting yellow polymer solution was adjusted with water to a 50% polymer solution.

40g (50 wt%; 99% of the theory) of a yellow polymer solution was obtained (Mw = 2900 Da).

### 6. Preparation Example 2 ([N,N-bis(3-dimethylaminopropyl)biuret]-[triethylene glycol]-polymer)

10.87 g (39.8 mmol) N,N-bis(3-dimethylaminopropyl)biuret was suspended in 20 mL of water and the suspension was heated to 80°C. To the yellow turbid solution 9.61 g (29.8 mmol) triethylene glycol dimethylate was added within 15 minutes and the reaction mixture was stirred at 80°C for another 20 hours. The reaction mixture was then cooled down to 25°C. The resulting orange-yellow polymer solution was adjusted with water to a 50% polymer solution.

40g (50 wt%; 98% of the theory) of a yellow polymer solution was obtained (Mw = 5100 Da).

### 7. Preparation Example 3 (f1,3-bis((pyridin-3-yl)methyl)biuretl-ftriethylene glycol]-polymer)

11.62 g (40.7 mmol) 1,3-bis((pyridin-3-yl)methyl)biuret was suspended in 20 mL of water and the suspension was heated to 80°C. To the yellow turbid solution 9.85 g (30.5 mmol) triethylene glycol dimethylate was added within 2.5 hours and the reaction mixture was stirred at 80°C for another 27 hours. The reaction mixture was then cooled down to 25°C. The resulting light yellow polymer solution was adjusted with water to a 51.2% polymer solution. 40 g (51.2% yield) of a yellow polymer solution was obtained (Mw = 3500 Da).

### 8. Preparation Example 4 (f1,3-bis((pyridin-4-yl)methyl)biuretl-ftriethylene glycol]-polymer)

11.62 g (40.7 mmol) 1,3-bis((pyridin-4-yl)methyl)biuret was suspended in 20 mL of water and the suspension was heated to 80°C. To the white turbid solution 9.85 g (30.5 mmol) triethylene glycol dimethylate was added within 40 minutes and the reaction mixture was stirred at 80°C for another 16 hours. The reaction mixture was then cooled down to 25°C. The resulting light yellow polymer solution was adjusted with water to a 50% polymer solution. 40 g (50% yield) of a pale yellow polymer solution was obtained (Mw = 7990 Da).

### 9. Comparative Example 1 (1,3-bis(3-dimethylamino)propyl)urea]-[triethylene glycol]-polymer)

10.87 g (39.8 mmol) of 1,3-bis(3-dimethylamino)propyl)urea was dissolved in 51.2 g of water and the resulting solution was heated to 80°C. To the solution, 26.2 g (81 mmol) triethylene glycol dimethylate was added within 23 minutes and the reaction mixture was stirred at 80°C for another 5 hours. The reaction mixture was then cooled down to 25°C. The resulting orange-yellow polymer solution was adjusted with water to a 50% polymer solution. 101.2 g (50 % yield of a yellow polymer solution was obtained (Mw = 5200 Da).

### 10. Comparative Example 2 (f1,3-bis(3-(1H-imidazol-1-yl)propyl)ureal-ftriethylene glycol]-polymer)

12.0 g (43.4 mmol) of 1,3-bis(3-(1H-imidazol-1-yl)propyl)urea was dissolved in 22.5 g of water and the resulting solution was heated to 80°C. To the solution, 10.5 g (32.6 mmol) triethylene glycol dimethylate was added within 20 minutes and the reaction mixture was stirred at 80°C for another 16 hours. The reaction mixture was then cooled down to 25°C. The resulting yellow polymer solution was adjusted with water to a 50% polymer solution. 45 g (50 % yield) of a yellow polymer solution was obtained (Mw = 3030 Da).

### 11. Copper plating of through-holes (THs):

The electrolyte baths containing the biuret-based quaternized polymer prepared according to preparation examples 1 to 4 and comparative examples 1 and 2 were used as additives for deposition of copper into through-hole-structures and then subjected to the following test method.

A sufficient copper deposition onto the walls of the through-holes (THs) means that the copper deposit has no or almost no defects. An insufficient copper deposition into THs is characterised by the presence of defects. Hence, the copper surface onto the walls of the THs after a sufficient deposit on the THs is as even, conformal as possible.

The various throwing powers (TP) of the varying electrolyte baths were analysed, wherein the respective throwing power (TP) describes how conform copper is deposited on the surface within the THs (onto the walls of the THs) compared to the Cu layer thickness on the surface of the substrate. A high TP (+++) describes an efficient and conform copper deposition, wherein the copper layer thickness in TH is comparable or even higher than the copper layer thickness on surface of the substrate. A low TP (-) describes an inefficient copper deposition with a plurality of defects within the THs wherein the copper layer thickness in TH is significantly smaller than on surface of the substrate. TPs are qualitatively ranked having the following synonyms:
- +++: Excellent
- ++: Good
- +: Medium
- -: Bad

Analysed were the throwing powers (TP) of the varying electrolyte baths in respect to varying aspect ratios of the THs' after copper deposition, wherein the respective aspect ratio defines the ratio of the respective width (diameter) of the through-hole in respect to the depth (thickness) of the panel.

### 12. Methods for copper deposition according to the examples

Equipment: Plating cell with 2.3 L volume or 23 L volume, respectively, no bath agitation with a pump, air agitation, and soluble copper anodes.

A copper electroplating bath stock solution comprising 14 g/L Cu²⁺ ions, 240 g/L sulphuric acid, 70 mg/L Cl⁻ ions, 100 mg/L Fe²⁺ ions, 250 mg/L EO/PO-copolymer (molecular weight 3200 Da) as a carrier-suppressor additive and 0.5 mL/L of a solution containing an standard sulphur-organic brightener additive (Cupracid^{®} Brightener, product of Atotech Deutschland GmbH) was used.

The biuret-based quaternized polymer according to preparation examples 1 to 4 and comparative examples 1 and 2 were added to said stock solution, respectively, wherein the concentration of the biuret-based quaternized polymer was varied between 25 mg/L and 200 mg/L, respectively.

A current density of 1.0 A/dm² or 1.5 A/dm² or 2.0 A/dm² was applied in the respective invention examples. The thickness of copper plated onto the top surface of the substrate was in average 30 µm. Depending on the current density applied, the plating time amounted to 130 min or 90 min or 65 min. Before plating, the test panels were cleaned, micro-etched and rinsed prior to electroplating of copper.

The test panels used throughout the preparation examples 1 to 4 and comparative examples 1 and 2 were characterized by a board thickness of 3.2 mm and drill hole diameters of the through holes of 200 µm (= aspect ratio 16) and 300 µm (= aspect ratio of 10.7) as well as a by a board thickness of 2.4 mm and drill hole diameters of the through holes of 200 µm (= aspect ratio 12) and 300 µm (= aspect ratio of 8).

The size of the test panels was 10 x 10.5 cm.

The results for examples 1 to 6 are summarised in the following tables 1 to 6, respectively.

### Example 1

As shown in Table 1 for example 1 below, a biuret-based quaternized polymer according to preparation example 1 was added to the respective electroplating bath, and compared to a respective electroplating bath, a commercial available leveller Cupracid^{®} LCD Correction supplied by Atotech was added, and compared to a respective electroplating bath wherein no polymer ("none") was added. A 2.3 L plating cell was used and a current density of 1.0 A/dm² was applied.

**Table 1: Example 1**

| **Exp.** | **Polymer** | **Cone. [mg/l]** | **TH aspect ratio** | **TP** |
|---|---|---|---|---|
| 1 | Cupracid^{®} LCD Correction | 200 | 10.7 | + |
| 2 | None | - | 10.7 | - |
| 3 | Preparation 1 | 25 | 10.7 | ++ |
| 4 | Preparation 1 | 100 | 10.7 | +++ |
| 5 | Cupracid^{®} LCD Correction | 200 | 16 | + |
| 6 | None | - | 16 | - |
| 7 | Preparation 1 | 25 | 16 | +++ |
| 8 | Preparation 1 | 100 | 16 | ++ |

When comparing preparation example 1 of the present invention (see Exp. 3, 4, 7 and 8) with the previously used Cupracid^{®} LCD Correction polymer (see Exp. 1 and 5), a significant increase in throwing power (TP) could be observed both at a TH aspect ratio of 10.7 and 16. When no polymer was added (see Exp. 2 and 6), the throwing power (TP) was not sufficient.

### Example 2

As shown in Table 2 for example 2 below, a biuret-based quaternized polymer according to preparation example 1 was added to the respective electroplating bath and compared to a respective electroplating bath wherein 200 mg/L Cupracid^{®} LCD Correction was added. Both polymers were used at a concentration of 100 mg/l in a 23 L tank. A shown in Table 2 varying panel thicknesses and varying current densities were analysed.

**Table 2: Example 2**

| **Exp.** | **Polymer** | **Panel Thickness [mm]** | **Current Density [A/dm²]** | **TH aspect ratio** | **TP** |
|---|---|---|---|---|---|
| 9 | Cupracid^{®} LCD Correction | 2.4 | 1.5 | 8 | + |
| 10 | Cupracid^{®} LCD Correction^{™} | 2.4 | 2.0 | 8 | + |
| 11 | Preparation 1 | 2.4 | 1.5 | 8 | +++ |
| 12 | Preparation 1 | 2.4 | 2.0 | 8 | +++ |
| 13 | Cupracid^{®} LCD Correction^{™} | 3.2 | 1.0 | 16 | + |
| 14 | Cupracid^{®} LCD Correction^{™} | 3.2 | 1.5 | 16 | - |
| 15 | Preparation 1 | 3.2 | 1.0 | 16 | +++ |
| 16 | Preparation 1 | 3.2 | 1.5 | 16 | +++ |

When comparing preparation example 1 of the present invention (see Exp. 11, 12, 15 and 16) with the previously used Cupracid^{®} LCD Correction polymer (see Exp. 9, 10, 13 and 14), a significant increase in throwing power (TP) could be observed both at a TH aspect ratio of 8 and 16, at current densities of 1.0 A/dm², 1.5 A/dm² and 2.0 A/dm², and at panel thicknesses of 2.4 mm and 3.2 mm.

In respect to the panel with thickness of 3.2 mm, when increasing the current density from 1.0 A/dm² (see Exp. 13 and 15) to 1.5 A/dm² (see Exp. 14 and 16) a significant difference in throwing power (TP) between Cupracid^{®} LCD Correction and preparation example 1 could be observed. While the TP for LCD significantly decreased when the current density was increased from 1.0 A/dm² to 1.5 A/dm² (see exp. 13 and 14), the TP for the preparation example 1 remained constant (see exp. 15 and 16).

### Example 3

As shown in Table 3 for example 3 below, a biuret-based quaternized polymer according to preparation example 2 was added to the respective electroplating bath and compared to a respective electroplating bath wherein a urea-based polymer according to comparative example 1 was added. Both polymers were used at a concentration of 25 mg/l and 100 mg/l, respectively in a 2.3 liter tank and a current density of 1.5 A/dm² was applied and were analysed in respect to their throwing power (TP).

**Table 3: Example 3**

| **Exp.** | **Polymer** | **Concentration [mg/l]** | **TH aspect ratio** | **TP** |
|---|---|---|---|---|
| 17 | Comparative 1 | 25 | 16 | + |
| 18 | Comparative 1 | 100 | 16 | + |
| 19 | Preparation 2 | 25 | 16 | +++ |
| 20 | Preparation 2 | 100 | 16 | ++ |

When comparing preparation example 2 of the present invention (see Exp. 19 and 20) with the comparative example 1 (see Exp. 17 and 18), a significant increase in throwing power (TP) could be observed at a TH aspect ratio of 16 both at a concentration of 25 mg/l (see Exp. 20) and 100 mg/l (see Exp. 19).

### Example 4

As shown in Table 4 for example 4, a biuret-based quaternized polymer according to preparation example 1 was added to the respective electroplating bath and compared to a respective electroplating bath wherein a urea-based polymer according to comparative example 2 was added. Both polymers were used at varying concentrations in a 2.3 I tank at a current density of 1.0 A/dm² and were analysed in respect to their throwing power (TP).

**Table 4: copper deposition**

| **Exp.** | **Polymer** | **Concentration [mg/l]** | **TH aspect ratio** | **TP** |
|---|---|---|---|---|
| 21 | Preparation 1 | 25 | 10,7 | +++ |
| 22 | Preparation 1 | 100 | 10,7 | +++ |
| 23 | Comparative 2 | 25 | 10,7 | + |
| 24 | Comparative 2 | 100 | 10,7 | + |
| 25 | Preparation 1 | 25 | 16 | +++ |
| 26 | Preparation 1 | 100 | 16 | +++ |
| 27 | Comparative 2 | 25 | 16 | + |
| 28 | Comparative 2 | 100 | 16 | + |

When comparing preparation example 1 of the present invention (see Exp. 21, 22, 25 and 26) with the comparative example 2 (see Exp. 23, 24, 27 and 28), a significant increase in throwing power (TP) could be observed at a TH aspect ratio of 10.7 and 16 both at a concentration of 25 mg/l and 100 mg/l.

### Example 5

As shown in Table 5 for example 5 below, a biuret-based quaternized polymer according to preparation example 1 was added to the respective electroplating bath, compared to a biuret-based quaternized polymer according to preparation example 2, and compared to a biuret-based quaternized polymer according to preparation example 3. The polymers were used at varying concentrations of 10 mg/l, 25 mg/l and 100 mg/L, respectively in a 2.3 I tank at a TH aspect ratio of 10.7 and at a current density of 1.0 A/dm² and were analysed in respect to their throwing power (TP).

**Table 5: Example 5**

| **Exp.** | **Polymer** | **Concentration [mg/l]** | **TP** |
|---|---|---|---|
| 29 | Preparation 1 | 10 | +++ |
| 30 | Preparation 1 | 25 | +++ |
| 31 | Preparation 1 | 100 | +++ |
| 32 | Preparation 2 | 10 | ++ |
| 33 | Preparation 2 | 25 | ++ |
| 34 | Preparation 2 | 100 | ++ |
| 35 | Preparation 3 | 10 | +++ |
| 36 | Preparation 3 | 25 | +++ |
| 37 | Preparation 3 | 100 | +++ |

All preparations examples 1, 2 and 3 (see Exp. 29 to 37) according to the present invention, showed a good or even excellent throwing power (TP) at concentrations of 10 mg/l, 25 mg/l or 100 mg/l.

### Example 6

As shown in Table 6 for example 6 below, a biuret-based quaternized polymer according to preparation example 3 was added to the respective electroplating bath and compared to a biuret-based quaternized polymer according to preparation example 4. The polymers were used at varying concentrations of 10 mg/l, 25 mg/l and 100 mg/L, respectively in a 2.3 L tank at a TH aspect ratio of 10.7 and at a current density of 1.0 A/dm² or 1.5 A/dm² and were analysed in respect to their throwing power (TP).

**Table 6: Example 6**

| **Exp.** | **Polymer** | **Concentration [mg/l]** | **Current density [A/dm²]** | **TP** |
|---|---|---|---|---|
| 38 | Preparation 3 | 25 | 1.0 | +++ |
| 39 | Preparation 3 | 100 | 1.0 | +++ |
| 40 | Preparation 4 | 25 | 1.0 | +++ |
| 41 | Preparation 4 | 100 | 1.0 | +++ |
| 42 | Preparation 3 | 25 | 1.5 | ++ |
| 43 | Preparation 3 | 100 | 1.5 | ++ |
| 44 | Preparation 4 | 25 | 1.5 | ++ |
| 45 | Preparation 4 | 100 | 1.5 | ++ |

All preparations examples 3 and 4 (see Exp. 38 to 45) according to the present invention, showed a good or even excellent throwing power (TP) at concentrations of 10 mg/l, 25 mg/l or 100 mg/l at variable current densities, 1.0 ASD and 1.5 ASD.

## Claims

1. A biuret-based quaternized polymer comprising a polymeric building block according to formula (I) 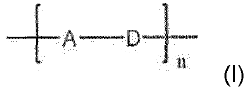 wherein A represents at least one unit of the following formulae (A1), (A2) and (A3) 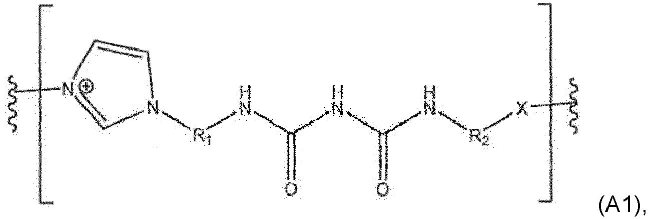 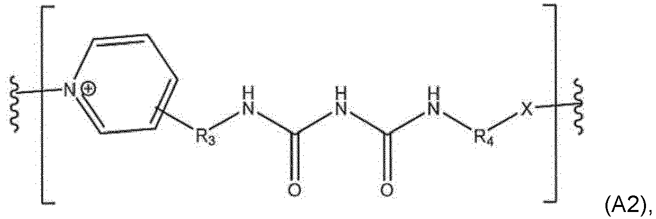 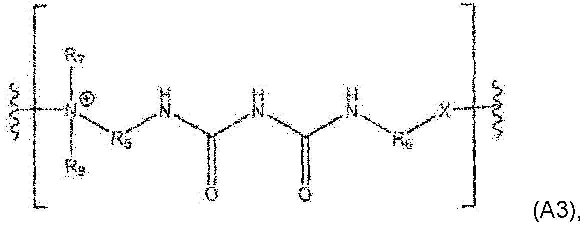
wherein R₁, R₂, R₄, R₅ and R₆ are independently selected from the group consisting of C₂-C₁₂-alkanediyl and -(CH₂)_{c}-[CH(Ra₆)-CH₂-O]_{d}-(CH₂)ₑ-, wherein c is an integer ranging from 0 to 3; wherein d is an integer ranging from 1 to 100; wherein e is an integer ranging from 1 to 3; wherein Ra₆ is independently selected from the group consisting of hydrogen, alkyl, aryl, aralkyl, alkanediyl, arenediyl and -(CH₂)_{f}-[CH(Ra₇)-CH₂-O]_{g}-(CH₂)ₕ-, wherein f is an integer ranging from 0 to 3; wherein g is an integer ranging from 1 to 100; wherein h is an integer ranging from 1 to 3; wherein Ra₇ is independently selected from the group consisting of hydrogen, alkyl, aryl and aralkyl;
wherein R₃ is selected from the group consisting of C₁-C₁₂-alkanediyl and -(CH₂)_{c}-[CH(Ra₆)-CH₂-O]_{d}-(CH₂)ₑ- wherein c is an integer ranging from 0 to 3; wherein d is an integer ranging from 1 to 100; wherein e is an integer ranging from 1 to 3; wherein Ra₆ is independently selected from the group consisting of hydrogen, alkyl, aryl, aralkyl, alkanediyl, arenediyl and -(CH₂)_{f}-[CH(Ra₇)-CH₂-O]_{g}-(CH₂)ₕ-, wherein f is an integer ranging from 0 to 3; wherein g is an integer ranging from 1 to 100; wherein h is an integer ranging from 1 to 3; wherein Ra₇ is independently selected from the group consisting of hydrogen, alkyl, aryl and aralkyl;
wherein X is independently selected from the group consisting of 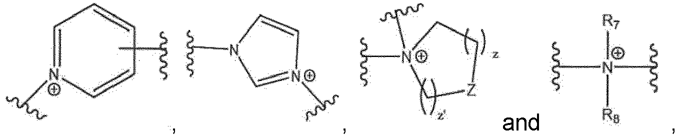
wherein Z is independently selected from the group consisting of -CH₂-, O, S; wherein z and z' are integers independently ranging from 1 to 6, wherein R₇ and R₈ are independently selected from the group consisting of hydrogen, alkyl, aryl, aralkyl and -CH₂-CH₂-(OCH₂CH₂)_{y}-OH, wherein y is an integer from 1 to 4;
wherein in case X is pyridinium, R₁, R₂, R₄, R₅ and R₆ can also be -CH₂-;
wherein n is an integer ranging from 1 to 40;
wherein D is selected from the group consisting of -CH₂-CH(OH)-CH₂-, -CH₂-CH(SH)-CH₂-, -(CH₂)ᵢ-[CH(Rd₁)-CH₂-O]ⱼ-(CH₂)ₖ- and -CH₂-CH(OH)-(CH₂)ₗ-[CH(Rd₂)-CH₂-O]ₘ-(CH₂)ₚ-CH(OH)-CH₂-, wherein i is an integer ranging from 0 to 3; wherein j is an integer ranging from 1 to 100; wherein k is an integer ranging from 1 to 3; wherein Rd₁ is independently selected from the group consisting of hydrogen, alkyl, aryl and aralkyl; wherein I is an integer ranging from 1 to 3; wherein m is an integer ranging from 1 to 100; wherein p is an integer ranging from 1 to 3; wherein Rd₂ is independently selected from the group consisting of hydrogen, alkyl, aryl and aralkyl,
wherein the individual units A may be the same or different, and
wherein the individual units D may be the same or different.

2. The biuret-based quaternized polymer according to claim 1, wherein X is independently selected from the group consisting of

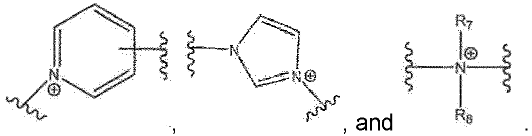

3. The biuret-based quaternized polymer according to any of the preceding claims, wherein in the polymer of formula (I) at least one A is selected as a unit represented by formula (A1-1) 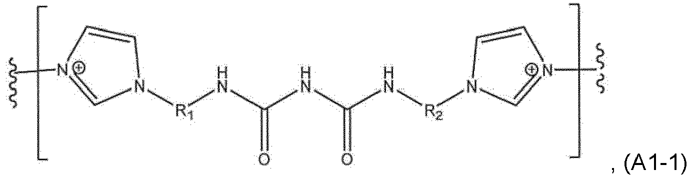 and/or wherein at least one A is selected as a unit represented by formula (A2-1) or formula (A2-2) 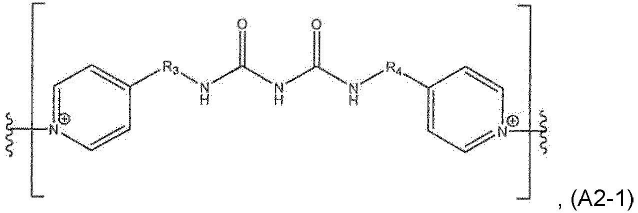 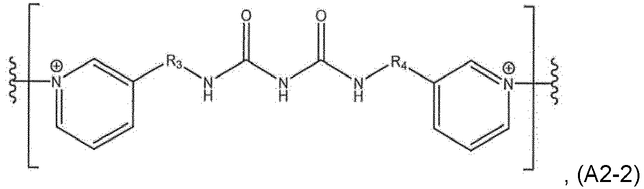 and/or wherein in the polymer of formula (I) at least one A is selected as a unit represented by formula (A3-1)

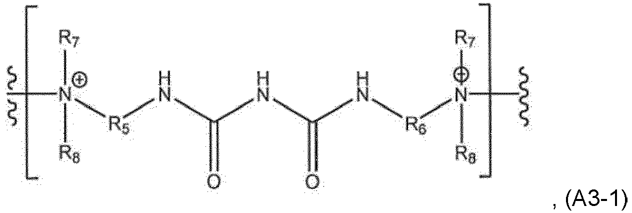

4. The biuret-based quaternized polymer according to any of the preceding claims, wherein R₁, R₂, R₄, R₅ and R₆ are independently selected as C₂-C₁₂-alkanediyl, preferably as C₂-C₆-alkanediyl, more preferably as -(CH₂)-(CH₂)-(CH₂)-, and/or wherein R₃ is selected as C₁-C₁₂-alkanediyl, preferably as C₁-C₄-alkanediyl, and more preferably as - (CH₂)-(CH₂)- or -(CH₂)-.

5. The biuret-based quaternized polymer according to any of the preceding claims, wherein D is selected from the group consisting of -CH₂-CH(OH)-CH₂-, -(CH₂)ᵢ-[CH(Rd₁)-CH₂-O]ⱼ-(CH₂)ₖ- and -CH₂-CH(OH)-(CH₂)ₗ-[CH(Rd₂)-CH₂-O]ₘ-(CH₂)ₚ-CH(OH)-CH₂-, wherein i is an integer ranging from 0 to 3; wherein j is an integer ranging from 1 to 100; wherein k is an integer ranging from 1 to 3; wherein Rd₁ is independently selected from the group consisting of hydrogen, alkyl, aryl and aralkyl, preferably from the group consisting of hydrogen, C₁-C₄-alkyl and phenyl, more preferably from the group consisting of hydrogen and C₁-C₄-alkyl, and most preferably from the group consisting of hydrogen and methyl; wherein I is an integer ranging from 1 to 3; wherein m is an integer ranging from 1 to 100; wherein p is an integer ranging from 1 to 3; wherein Rd₂ is independently selected from the group consisting of hydrogen, alkyl, aryl and aralkyl, preferably from the group consisting of hydrogen, C₁-C₄-alkyl and phenyl, more preferably from the group consisting of hydrogen and C₁-C₄-alkyl, and even more preferably from the group consisting of hydrogen and methyl.

6. The biuret-based quaternized polymer according to any of the preceding claims, wherein D is selected as -(CH₂)ᵢ-[CH(Rd₁)-CH₂-O]ⱼ-(CH₂)ₖ-, wherein i is 2 or 3; wherein j is an integer ranging from 1 to 25, wherein k is an integer ranging from 2 to 3 and wherein Rd₁ is independently selected from the group consisting of hydrogen and C₁-C₄-alkyl, preferably from hydrogen and methyl.

7. The biuret-based quaternized polymer according to any of the preceding claims, wherein D is selected from the group consisting of -CH₂-CH₂-O-CH₂-CH₂-; -CH₂-CH₂-O-CH₂-CH₂-O-CH₂-CH₂- and -CH₂-CH₂-O-CH₂-CH₂-O-CH₂-CH₂-O-CH₂-CH₂-.

8. The biuret-based quaternized polymer according to any of the preceding claims, wherein the average molecular mass weight (MW) of the polymers ranges from 580 to 10000 g/mol, preferably from 1000 to 7500 g/mol and more preferably from 500 to 6000 g/mol, even more preferably from 1500 to 5000 g/mol.

9. The biuret-based quaternized polymer according to any of the preceding claims, wherein the terminal tertiary amino groups of A, including nitrogen atoms bound in a pyridine and/or imdidazole ring, are present in the polymers of formula (I) are converted into the respective quatenary aminium groups by using an organic monohalide or an organic monopsydohalide such as such as benzyl chloride, alkyl chloride like 1-chlorohexane or ethoxylated or propoxylated alkylhalides, epichlorohydrine, 2-(chloromethyl)thiirane, propargyl chloride or allyl chloride or their corresponding bromides and mesylates, or by using an appropriate mineral acid, such as hydrochloric acid, hydrobromic acid or sulfuric acid.

10. A biuret-based quaternized monomer comprising a compound according to formula (Mo1) or (Mo2) 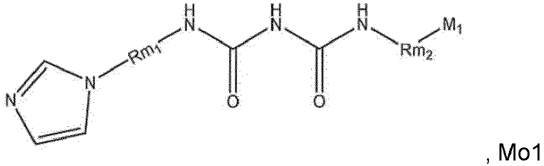 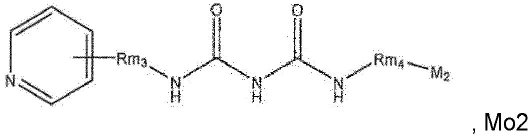
wherein Rm₁, Rm₂, and Rm₄ are independently selected from the group consisting of C₂-C₁₂-alkanediyl and -(CH₂)_{α}-[CH(Ra₆)-CH₂-O]_{β}-(CH₂)_{X}- wherein α is an integer ranging from 0 to 3; wherein β is an integer ranging from 1 to 100; wherein _{X} is an integer ranging from 1 to 3; wherein Ra₆ is independently selected from the group consisting of hydrogen, alkyl, aryl, aralkyl, alkanediyl, arenediyl and -(CH₂)_{f}-[CH(Ra₇)-CH₂-O]_{g}-(CH₂)ₕ-, wherein f is an integer ranging from 0 to 3; wherein g is an integer ranging from 1 to 100; wherein h is an integer ranging from 1 to 3; wherein Ra₇ is independently selected from the group consisting of hydrogen, alkyl, aryl and aralkyl;
wherein Rm₃ is selected from the group consisting of C₁-C₁₂-alkanediyl and -(CH₂)_{α}-[CH(Ra₆)-CH₂-O]_{β}-(CH₂)_{X}- wherein α is an integer ranging from 0 to 3; wherein β is an integer ranging from 1 to 100; wherein _{X} is an integer ranging from 1 to 3; wherein Ra₆ is independently selected from the group consisting of hydrogen, alkyl, aryl, aralkyl, alkanediyl, arenediyl and -(CH₂)_{f}-[CH(Ra₇)-CH₂-O]_{g}-(CH₂)ₕ-, wherein f is an integer ranging from 0 to 3; wherein g is an integer ranging from 1 to 100; wherein h is an integer ranging from 1 to 3; wherein Ra₇ is independently selected from the group consisting of hydrogen, alkyl, aryl and aralkyl;
wherein M₁ and M₂ are independently selected from the group consisting of 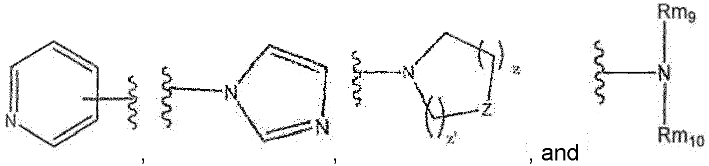
wherein Z is selected from -CH₂-, O, S; wherein z and z' are integers independently ranging from 1 to 6, wherein Rm₉ and Rm₁₀ are independently selected from the group consisting of alkyl, aryl, aralkyl and -CH₂-CH₂-(OCH₂CH₂)_{ψ}-OH wherein _{ψ} is an integer from 1 to 4,

11. The biuret-based quaternized monomer comprising according to claim 10, wherein M1 and M2 are independently selected from the group consisting of

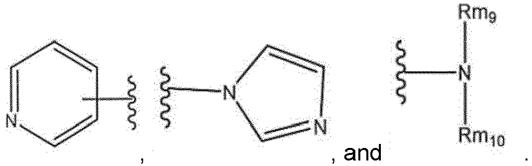

12. The biuret-based quaternized monomer comprising according to claim 11 or 12, wherein Rm₁, Rm₂ and Rm₄, are selected as C₂-C₁₂-alkanediyl, preferably as C₂-C₆-alkanediyl, more preferably as -(CH₂)-(CH₂)-(CH₂)-, and/or wherein Rm₃ is selected as C₁-C₁₂-alkanediyl, preferably as C₁-C₄-alkanediyl, more preferably as -(CH₂)-(CH₂)- or - (CH₂)-.

13. An aqueous metal or metal alloy plating bath comprising at least one source of metal ions which is **characterised in that** it comprises at least one biuret-based quaternized polymer according to any of the preceding claims 1 to 9, wherein preferably the at least one source of metal ions is a source of copper ions.

14. A method for deposition of metal or metal alloy onto a substrate comprising, in this order, the steps
(i) providing a substrate,
(ii) contacting the substrate with a metal or metal alloy plating bath according to claim 13, and
(iii) applying an electrical current between the substrate and at least one anode,
and thereby depositing a metal or metal alloy on at least a portion of the substrate.

15. A method of synthesizing a biuret-based quaternized polymer according to any of claims 1 to 9, wherein the method comprises providing at least one starting material represented by one of the following formulae (Mo1), (Mo2) and (Mo3) 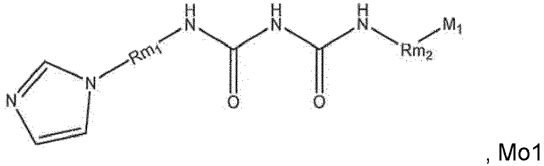 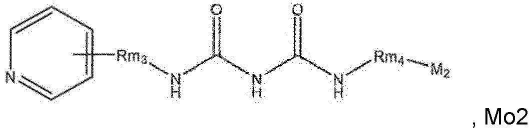 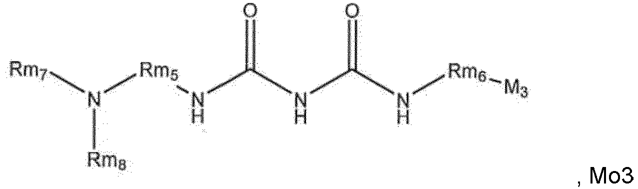
wherein Rm₁, Rm₂, Rm₄, Rm₅ and Rm₆ are independently selected from the group consisting of C₂-C₁₂-alkanediyl and -(CH₂)_{α}-[CH(Ra₆)-CH₂-O]_{β}-(CH₂)_{X}- wherein α is an integer ranging from 0 to 3; wherein β is an integer ranging from 1 to 100; wherein _{X} is an integer ranging from 1 to 3; wherein Ra₆ is independently selected from the group consisting of hydrogen, alkyl, aryl, aralkyl, alkanediyl, arenediyl and -(CH₂)_{f}-[CH(Ra₇)-CH₂-O]_{g}-(CH₂)ₕ-, wherein f is an integer ranging from 0 to 3; wherein g is an integer ranging from 1 to 100; wherein h is an integer ranging from 1 to 3; wherein Ra₇ is independently selected from the group consisting of hydrogen, alkyl, aryl and aralkyl;
wherein Rm₃ is selected from the group consisting of C₁-C₁₂-alkanediyl and -(CH₂)_{α}-[CH(Ra₆)-CH₂-O]_{β}-(CH₂)_{X}- wherein α is an integer ranging from 0 to 3; wherein β is an integer ranging from 1 to 100; wherein _{X} is an integer ranging from 1 to 3; wherein Ra₆ is independently selected from the group consisting of hydrogen, alkyl, aryl, aralkyl, alkanediyl, arenediyl and -(CH₂)_{f}-[CH(Ra₇)-CH₂-O]_{g}-(CH₂)ₕ-, wherein f is an integer ranging from 0 to 3; wherein g is an integer ranging from 1 to 100; wherein h is an integer ranging from 1 to 3; wherein Ra₇ is independently selected from the group consisting of hydrogen, alkyl, aryl and aralkyl;
wherein M₁, M₂ and M₃ is independently selected from the group consisting of 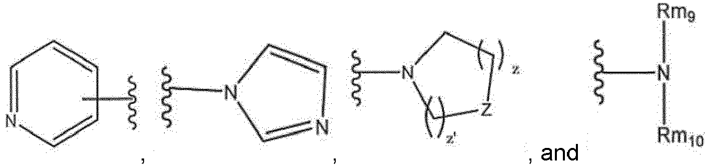
wherein Z is selected from -CH₂-, O, S; wherein z and z' are integers independently ranging from 1 to 6, wherein Rm₉ and Rm₁₀ are independently selected from the group consisting of alkyl, aryl, aralkyl and -CH₂-CH₂-(OCH₂CH₂)_{ψ}-OH wherein _{ψ} is an integer from 1 to 4,
wherein the method comprises reacting the at least one starting material represented by one of the formulae (Mo1), (Mo2) and (Mo3) with one or more of the following compounds (B1) to (B4) to obtain the biuret-based quaternized polymer, 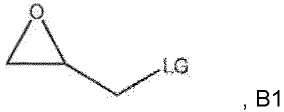 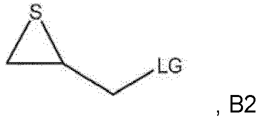 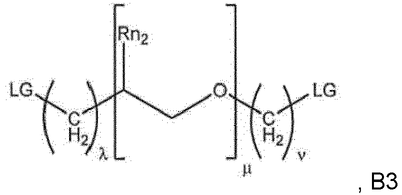 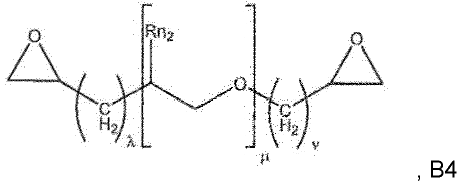
wherein LG is independently selected from the group consisting of triflate, nonaflate, alkylsulfonates, arylsulfonates and halides; wherein λ is an integer ranging from 1 to 3; wherein µ is an integer ranging from 1 to 100; wherein v is an integer ranging from 1 to 3; wherein Rn₂ is independently from each other selected from the group consisting of hydrogen, alkyl, aryl and aralkyl.

## Patentansprüche

1. Biuretbasiertes quaternisiertes Polymer, umfassend einen polymeren Baustein gemäß Formel (I) 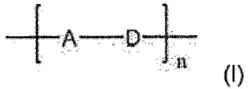
wobei A mindestens eine Einheit der folgenden Formeln (A1), (A2) und (A3) darstellt 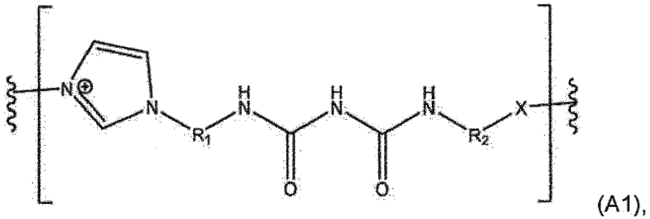 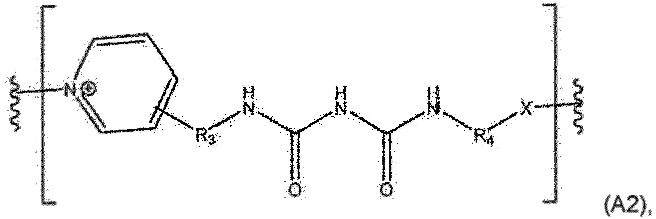 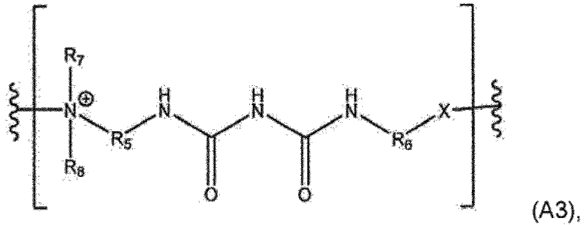
wobei R₁, R₂, R₄, R₅ und R₆ unabhängig ausgewählt sind aus der Gruppe bestehend aus C₂-C₁₂-Alkandiyl und -(CH₂)_{c}-[CH(Ra₆)-CH₂ O]_{d}-(CH₂)ₑ-, wobei c eine ganze Zahl im Bereich von 0 bis 3 ist; wobei d eine ganze Zahl im Bereich von 1 bis 100 ist; wobei e eine ganze Zahl im Bereich von 1 bis 3 ist; wobei Ra₆ unabhängig ausgewählt ist aus der Gruppe bestehend aus Wasserstoff, Alkyl, Aryl, Aralkyl, Alkandiyl, Arendiyl und -(CH₂)_{f}-[CH(Ra₇)-CH₂-O]_{g}-(CH₂)ₕ-, wobei f eine ganze Zahl im Bereich von 0 bis 3 ist; wobei g eine ganze Zahl im Bereich von 1 bis 100 ist; wobei h eine ganze Zahl im Bereich von 1 bis 3 ist; wobei Ra₇ unabhängig ausgewählt ist aus der Gruppe bestehend aus Wasserstoff, Alkyl, Aryl und Aralkyl;
wobei R₃ ausgewählt ist aus der Gruppe bestehend aus C₁-C₁₂-Alkandiyl und -(CH₂)_{c}-[CH(Ra₆)-CH₂-O]_{d}-(CH₂)ₑ-, wobei c eine ganze Zahl im Bereich von 0 bis 3 ist; wobei d eine ganze Zahl im Bereich von 1 bis 100 ist; wobei e eine ganze Zahl im Bereich von 1 bis 3 ist; wobei Ra₆ unabhängig ausgewählt ist aus der Gruppe bestehend aus Wasserstoff, Alkyl, Aryl, Aralkyl, Alkandiyl, Arendiyl und - (CH₂)_{f}-[CH(Ra₇)-CH₂-O]_{g}-(CH₂)ₕ-, wobei f eine ganze Zahl im Bereich von 0 bis 3 ist; wobei g eine ganze Zahl im Bereich von 1 bis 100 ist; wobei h eine ganze Zahl im Bereich von 1 bis 3 ist; wobei Ra 7 unabhängig ausgewählt ist aus der Gruppe bestehend aus Wasserstoff, Alkyl, Aryl und Aralkyl;
wobei X unabhängig ausgewählt ist aus der Gruppe bestehend aus 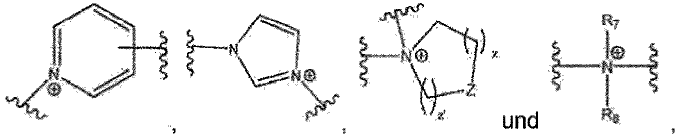
wobei Z unabhängig ausgewählt ist aus der Gruppe bestehend aus -CH₂-, O, S; wobei z und z' ganze Zahlen sind, die unabhängig im Bereich von 1 bis 6 liegen, wobei R₇ und R₈ unabhängig ausgewählt sind aus der Gruppe bestehend aus Wasserstoff, Alkyl, Aryl, Aralkyl und -CH₂-CH₂-(OCH₂CH₂)_{y}-OH, wobei y eine ganze Zahl im Bereich von 1 bis 4 ist;
wobei in dem Fall, in dem X Pyridinium ist, R₁, R₂, R₄, R₅ und R₆ auch -CH₂- sein kann;
wobei n eine ganze Zahl im Bereich von 1 bis 40 ist;
wobei D ausgewählt ist aus der Gruppe bestehend aus -CH₂-CH(OH)-CH₂-,-CH₂-CH(SH)-CH₂-, -(CH₂)ᵢ-[CH(Rd₁)-CH₂-O]ⱼ-(CH₂)ₖ- und -CH₂-CH(OH)-(CH₂)ₗ-[CH(Rd₂)-CH₂-O]ₘ-(CH₂)ₚ-CH(OH)-CH₂-, wobei i eine ganze Zahl im Bereich von 0 bis 3 ist; wobei j eine ganze Zahl im Bereich von 1 bis 100 ist; wobei k eine ganze Zahl im Bereich von 1 bis 3 ist; wobei Rd₁ unabhängig ausgewählt ist aus der Gruppe bestehend aus Wasserstoff, Alkyl, Aryl und Aralkyl; wobei l eine ganze Zahl im Bereich von 1 bis 3 ist; wobei m eine ganze Zahl im Bereich von 1 bis 100 ist; wobei p eine ganze Zahl im Bereich von 1 bis 3 ist; wobei Rd₂ unabhängig ausgewählt ist aus der Gruppe bestehend aus Wasserstoff, Alkyl, Aryl und Aralkyl,
wobei die einzelnen Einheiten A gleich oder verschieden sein können, und
wobei die einzelnen Einheiten D gleich oder verschieden sein können.

2. Biuretbasiertes quaternisiertes Polymer nach Anspruch 1, wobei X unabhängig ausgewählt ist aus der Gruppe bestehend aus

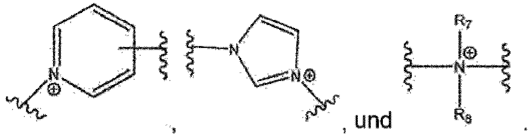

3. Biuretbasiertes quaternisiertes Polymer nach einem der vorstehenden Ansprüche, wobei in dem Polymer der Formel (I) mindestens ein A als eine Einheit ausgewählt ist, die durch die Formel (A1-1) dargestellt wird 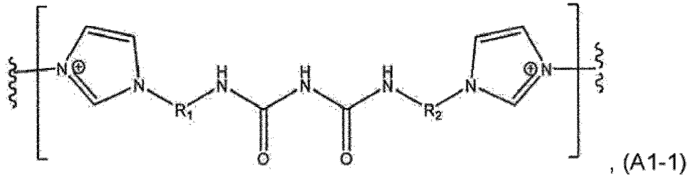 und/oder wobei mindestens ein A als eine Einheit ausgewählt ist, die durch die Formel (A2-1) oder Formel (A2-2) dargestellt wird 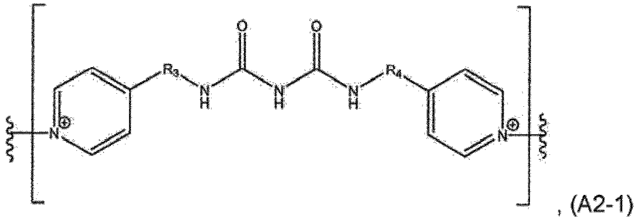 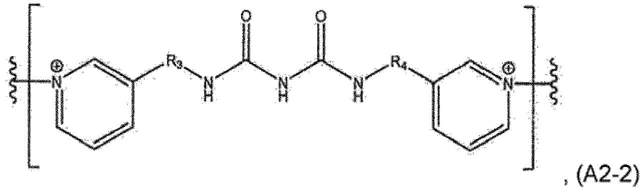 und/oder wobei in dem Polymer der Formel (I) mindestens ein A als eine Einheit ausgewählt ist, die durch die Formel (A3-1) dargestellt wird

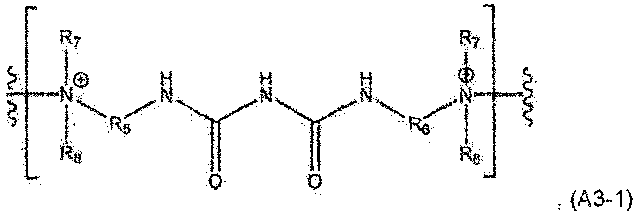

4. Biuretbasiertes quaternisiertes Polymer nach einem der vorstehenden Ansprüche, wobei R₁, R₂, R₄, R₅ und R₆ unabhängig als C₂-C₁₂-Alkandiyl, vorzugsweise als C₂-C₆-Alkandiyl, mehr bevorzugt als -(CH₂)-(CH₂)-(CH₂)-ausgewählt sind, und/oder wobei R₃ als C₁-C₁₂-Alkandiyl, vorzugsweise als C₁-C₄-Alkandiyl, und mehr bevorzugt als -(CH₂)-(CH₂)- oder -(CH₂)- ausgewählt ist.

5. Biuretbasiertes quaternisiertes Polymer nach einem der vorstehenden Ansprüche, wobei D ausgewählt ist aus der Gruppe bestehend aus -CH₂-CH(OH)-CH₂-, -(CH₂)ᵢ-[CH(Rd₁)-CH₂-O]ⱼ-(CH₂)ₖ- und -CH₂-CH(OH)-(CH₂)ₗ-[CH(Rd₂)-CH₂-O]ₘ-(CH₂)ₚ-CH(OH)-CH₂-, wobei i eine ganze Zahl im Bereich von 0 bis 3 ist; wobei j eine ganze Zahl im Bereich von 1 bis 100 ist; wobei k eine ganze Zahl im Bereich von 1 bis 3 ist; wobei Rd₁ unabhängig ausgewählt ist aus der Gruppe bestehend aus Wasserstoff, Alkyl, Aryl und Aralkyl, vorzugsweise aus der Gruppe bestehend aus Wasserstoff, C₁-C₄-Alkyl und Phenyl, mehr bevorzugt aus der Gruppe bestehend aus Wasserstoff und C₁-C₄-Alkyl und am meisten bevorzugt aus der Gruppe bestehend aus Wasserstoff und Methyl; wobei I eine ganze Zahl im Bereich von 1 bis 3 ist; wobei m eine ganze Zahl im Bereich von 1 bis 100 ist; wobei p eine ganze Zahl im Bereich von 1 bis 3 ist; wobei Rd₂ unabhängig ausgewählt ist aus der Gruppe bestehend aus Wasserstoff, Alkyl, Aryl und Aralkyl, vorzugsweise aus der Gruppe bestehend aus Wasserstoff, C₁-C₄-Alkyl und Phenyl, mehr bevorzugt aus der Gruppe bestehend aus Wasserstoff und C₁-C₄-Alkyl und noch mehr bevorzugt aus der Gruppe bestehend aus Wasserstoff und Methyl.

6. Biuretbasiertes quaternisiertes Polymer nach einem der vorstehenden Ansprüche, wobei D als -(CH₂)ᵢ-[CH(Rd₁)-CH₂-O]ⱼ-(CH₂)ₖ- ausgewählt ist, wobei i 2 oder 3 ist; wobei j eine ganze Zahl im Bereich von 1 bis 25 ist, wobei k eine ganze Zahl im Bereich von 2 bis 3 ist und wobei Rd₁ unabhängig ausgewählt ist aus der Gruppe bestehend aus Wasserstoff und C₁-C₄-Alkyl, vorzugsweise aus Wasserstoff und Methyl.

7. Biuretbasiertes quaternisiertes Polymer nach einem der vorstehenden Ansprüche, wobei D ausgewählt ist aus der Gruppe bestehend aus -CH₂-CH₂-O-CH₂-CH₂-;-CH₂-CH₂-O-CH₂-CH₂-O-CH₂-CH₂- und CH₂-CH₂-O-CH₂-CH₂-O-CH₂-CH₂-O-CH₂-CH₂-.

8. Biuretbasiertes quaternisiertes Polymer nach einem der vorstehenden Ansprüche, wobei das durchschnittliche Molekulargewicht (MW) der Polymere von 580 bis 10000 g/mol, vorzugsweise von 1000 bis 7500 g/mol und mehr bevorzugt von 500 bis 6000 g/mol, noch mehr bevorzugt von 1500 bis 5000 g/mol, reicht.

9. Biuretbasiertes quaternisiertes Polymer nach einem der vorstehenden Ansprüche, wobei die terminalen tertiären Aminogruppen von A, einschließlich Stickstoffatomen, die in einem Pyridin- und/oder Imdidazol-Ring gebunden sind, die in den Polymeren der Formel (I) vorhanden sind, in die jeweiligen quaternären Aminogruppen umgewandelt werden, indem ein organisches Monohalogenid oder ein organisches Monopseudohalogenid, wie Benzylchlorid, Alkylchlorid, wie 1-Chlorhexan oder ethoxylierte oder propoxylierte Alkylhalogenide, Epichlorhydrin, 2-(Chlormethyl)thiiran, Propargylchlorid oder Allylchlorid oder deren entsprechende Bromide und Mesylate, verwendet wird oder indem eine geeignete Mineralsäure, wie Salzsäure, Bromwasserstoffsäure oder Schwefelsäure verwendet wird.

10. Biuretbasiertes quaternisiertes Monomer, umfassend eine Verbindung gemäß Formel (Mo1) oder (Mo2) 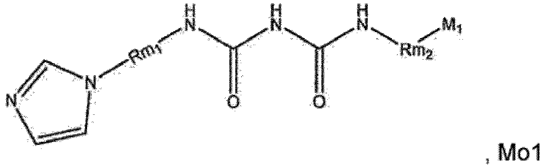 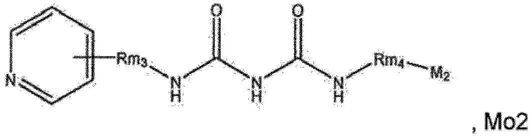
wobei Rm₁, Rm₂ und Rm₄ unabhängig ausgewählt sind aus der Gruppe bestehend aus C₂-C₁₂-Alkandiyl und -(CH₂)_{α}-[CH(Ra₆)-CH₂-O]_{β}-(CH₂)_{χ}-, wobei α eine ganze Zahl im Bereich von 0 bis 3 ist; wobei β eine ganze Zahl im Bereich von 1 bis 100 ist; wobei χ eine ganze Zahl im Bereich von 1 bis 3 ist; wobei Ra₆ unabhängig ausgewählt ist aus der Gruppe bestehend aus Wasserstoff, Alkyl, Aryl, Aralkyl, Alkandiyl, Arendiyl und -(CH₂)_{f}-[CH(Ra₇)-CH₂-O]g-(CH₂)ₕ-, wobei f eine ganze Zahl im Bereich von 0 bis 3 ist; wobei g eine ganze Zahl im Bereich von 1 bis 100 ist; wobei h eine ganze Zahl im Bereich von 1 bis 3 ist; wobei Ra₇ unabhängig ausgewählt ist aus der Gruppe bestehend aus Wasserstoff, Alkyl, Aryl und Aralkyl;
wobei Rm₃ ausgewählt ist aus der Gruppe bestehend aus C₁-C₁₂-Alkandiyl und -(CH₂)_{α}-[CH(Ra₆)-CH₂-O]_{β}-(CH₂)_{χ}-, wobei α eine ganze Zahl im Bereich von 0 bis 3 ist; wobei β eine ganze Zahl im Bereich von 1 bis 100 ist; wobei χ eine ganze Zahl im Bereich von 1 bis 3 ist; wobei Ra₆ unabhängig ausgewählt ist aus der Gruppe bestehend aus Wasserstoff, Alkyl, Aryl, Aralkyl, Alkandiyl, Arendiyl und - (CH₂)_{f}-[CH(Ra₇)-CH₂-O]_{g}-(CH₂)ₕ-, wobei f eine ganze Zahl im Bereich von 0 bis 3 ist; wobei g eine ganze Zahl im Bereich von 1 bis 100 ist; wobei h eine ganze Zahl im Bereich von 1 bis 3 ist; wobei Ra₇ unabhängig ausgewählt ist aus der Gruppe bestehend aus Wasserstoff, Alkyl, Aryl und Aralkyl;
wobei M₁ und M₂ unabhängig ausgewählt sind aus der Gruppe bestehend aus 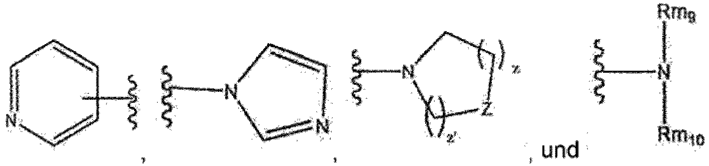
wobei Z aus -CH₂-, O, S ausgewählt ist; wobei z und z` ganze Zahlen sind, die unabhängig im Bereich von 1 bis 6 liegen, wobei Rm₉ und Rm₁₀ unabhängig ausgewählt sind aus der Gruppe bestehend aus Alkyl, Aryl, Aralkyl und -CH₂-CH₂-(OCH₂CH₂)_{ψ}-OH, wobei _{ψ} eine ganze Zahl im Bereich von 1 bis 4 ist,

11. Biuretbasiertes quaternisiertes Monomer umfassend nach Anspruch 10, wobei M1 und M2 unabhängig ausgewählt sind aus der Gruppe bestehend aus

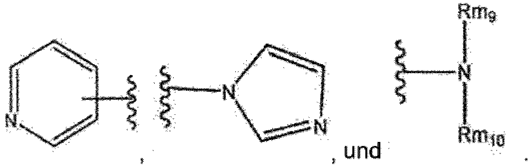

12. Biuretbasiertes quaternisiertes Monomer, umfassend nach Anspruch 11 oder 12, wobei Rm₁, Rm₂ und Rm₄ als C₂-C₁₂-Alkandiyl, vorzugsweise als C₂-C₆-Alkandiyl, mehr bevorzugt als -(CH₂)-(CH₂)-(CH₂)- ausgewählt sind, und/oder wobei Rm₃ als C₁-C₁₂-Alkandiyl, vorzugsweise als C₁-C₄-Alkandiyl, mehr bevorzugt als -(CH₂)-(CH₂)- oder -(CH₂)- ausgewählt ist.

13. Wässriges Metall- oder Metalllegierungsbeschichtungsbad, das mindestens eine Quelle von Metallionen umfasst, das **dadurch gekennzeichnet ist, dass** es mindestens ein biuretbasiertes quaternisiertes Polymer nach einem der vorstehenden Ansprüche 1 bis 9 umfasst, wobei vorzugsweise die mindestens eine Quelle von Metallionen eine Quelle von Kupferionen ist.

14. Verfahren zum Abscheiden von Metall oder Metalllegierung auf ein Substrat, das in dieser Reihenfolge die Schritte umfasst
(i) Bereitstellen eines Substrats,
(ii) Inkontaktbringen des Substrats mit einem Metall- oder Metalllegierungsbeschichtungsbad nach Anspruch 13, und
(iii) Anlegen eines elektrischen Stroms zwischen dem Substrat und mindestens einer Anode,
und dadurch Abscheiden eines Metalls oder einer Metalllegierung auf mindestens einem Abschnitt des Substrats.

15. Verfahren zum Synthetisieren eines biuretbasierten quaternisierten Polymers nach einem der Ansprüche 1 bis 9, wobei das Verfahren das Bereitstellen mindestens eines Ausgangsmaterials umfasst, das durch eine der folgenden Formeln (Mo1), (Mo2) und (Mo3) dargestellt wird 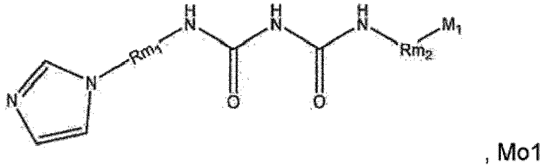 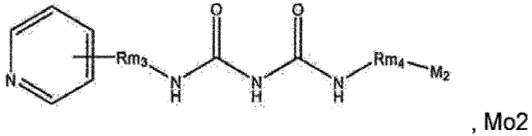 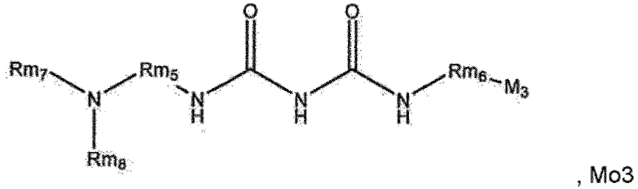
wobei Rm₁, Rm₂, Rm₄, Rm₅ und Rm₆ unabhängig ausgewählt sind aus der Gruppe bestehend aus C₂-C₁₂-Alkandiyl und -(CH₂)_{α}-[CH(Ra₆)-CH₂-O]_{β}-(CH₂)x-wobei α eine ganze Zahl im Bereich von 0 bis 3 ist; wobei β eine ganze Zahl im Bereich von 1 bis 100 ist; wobei × eine ganze Zahl im Bereich von 1 bis 3 ist; wobei Ra₆ unabhängig ausgewählt ist aus der Gruppe bestehend aus Wasserstoff, Alkyl, Aryl, Aralkyl, Alkandiyl, Arendiyl und -(CH₂)_{f}-[CH(Ra₇)-CH₂-O]_{g}-(CH₂)ₕ-, wobei f eine ganze Zahl im Bereich von 0 bis 3 ist; wobei g eine ganze Zahl im Bereich von 1 bis 100 ist; wobei h eine ganze Zahl im Bereich von 1 bis 3 ist; wobei Ra₇ unabhängig ausgewählt ist aus der Gruppe bestehend aus Wasserstoff, Alkyl, Aryl und Aralkyl;
wobei Rm₃ ausgewählt ist aus der Gruppe bestehend aus C₁-C₁₂-Alkandiyl und -(CH₂)_{α}-[CH(Ra₆)-CH₂-O]_{β}-(CH₂)_{X}-, wobei α eine ganze Zahl im Bereich von 0 bis 3 ist; wobei β eine ganze Zahl im Bereich von 1 bis 100 ist; wobei × eine ganze Zahl im Bereich von 1 bis 3 ist; wobei Ra₆ unabhängig ausgewählt ist aus der Gruppe bestehend aus Wasserstoff, Alkyl, Aryl, Aralkyl, Alkandiyl, Arendiyl und - (CH₂)_{f}-[CH(Ra₇)-CH₂-O]_{g}-(CH₂)ₕ-, wobei f eine ganze Zahl im Bereich von 0 bis 3 ist; wobei g eine ganze Zahl im Bereich von 1 bis 100 ist; wobei h eine ganze Zahl im Bereich von 1 bis 3 ist; wobei Ra₇ unabhängig ausgewählt ist aus der Gruppe bestehend aus Wasserstoff, Alkyl, Aryl und Aralkyl;
wobei M₁, M₂ und M₃ unabhängig ausgewählt sind aus der Gruppe bestehend aus 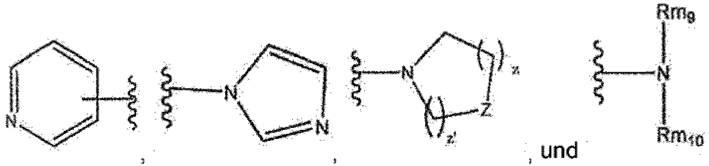
wobei Z aus -CH₂-, O, S ausgewählt ist; wobei z und z' ganze Zahlen sind, die unabhängig im Bereich von 1 bis 6 liegen, wobei Rm₉ und Rm₁₀ unabhängig ausgewählt sind aus der Gruppe bestehend aus Alkyl, Aryl, Aralkyl und -CH₂-CH₂-(OCH₂CH₂)_{ψ}-OH, wobei _{ψ} eine ganze Zahl im Bereich von 1 bis 4 ist,
wobei das Verfahren das Reagieren des mindestens einen Ausgangsmaterials, das durch eine der Formeln (Mo1), (Mo2) und (Mo3) dargestellt wird, mit einer oder mehreren der folgenden Verbindungen (B1) bis (B4) umfasst, um das biuretbasierte quaternisierte Polymer zu erhalten, 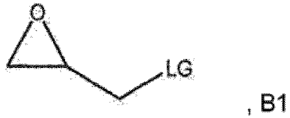 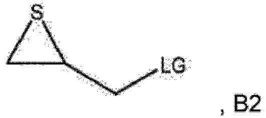 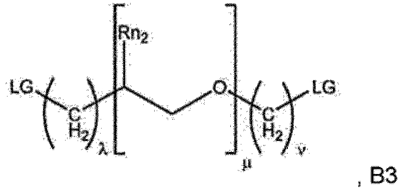 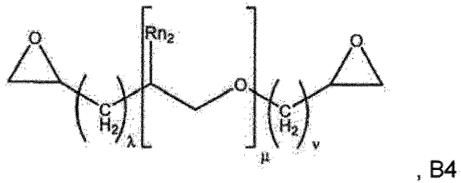
wobei LG unabhängig ausgewählt ist aus der Gruppe bestehend aus Triflat, Nonaflat, Alkylsulfonaten, Arylsulfonaten und Halogenide; wobei λ eine ganze Zahl im Bereich von 1 bis 3 ist; wobei µ eine ganze Zahl im Bereich von 1 bis 100 ist; wobei v eine ganze Zahl im Bereich von 1 bis 3 ist; wobei Rn₂ unabhängig voneinander ausgewählt ist aus der Gruppe bestehend aus Wasserstoff, Alkyl, Aryl und Aralkyl.

## Revendications

1. Polymère quaternisé à base de biuret comprenant un bloc de construction polymère selon la formule (I) 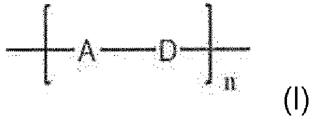 où A représente au moins un motif des formules (A1), (A2) et (A3) suivantes : 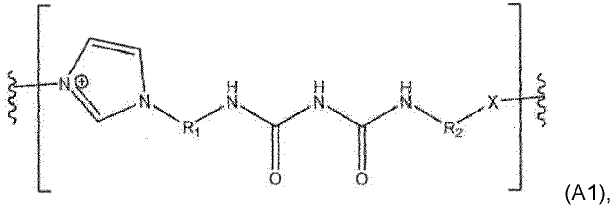 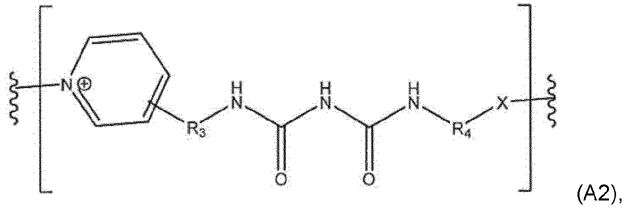 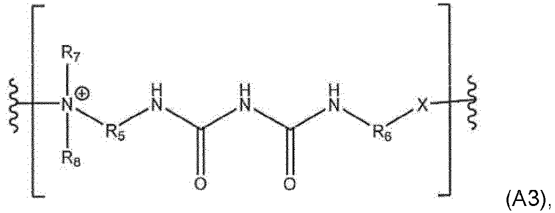
où R₁, R₂, R₄, R₅et R₆ sont indépendamment choisis dans le groupe constitué de C₂-C₁₂-alkanediyle et -(CH₂)_{c}- [CH (Ra₆)-CH₂O ]_{d}-(CH₂)ₑ-, où c est un nombre entier allant de 0 à 3 ; où d est un nombre entier allant de 1 à 100 ; où e est un nombre entier allant de 1 à 3 ; où Ra₆ est choisi indépendamment dans le groupe constitué d'hydrogène, alkyle, aryle, aralkyle, alkanediyle, ardiyle et - (CH₂)_{f}-[CH(Ra₇)-CH₂-O]_{g}-(CH₂)ₕ-, où f est un nombre entier allant de 0 à 3 ; où g est un nombre entier allant de 1 à 100 ; où h est un nombre entier allant de 1 à 3 ; où Ra₇ est indépendamment choisi dans le groupe constitué d'hydrogène, alkyle, aryle et aralkyle ;
où R₃ est choisi dans le groupe constitué de C₁-C₁₂-alkanediyle et -(CH₂)_{c}-[CH (Ra₆)-CH₂-O]_{d}-(CH₂)ₑ- où c est un nombre entier allant de 0 à 3 ; où d est un nombre entier allant de 1 à 100 ; où e est un nombre entier allant de 1 à 3 ; où Ra₆ est choisi indépendamment dans le groupe constitué d'hydrogène, alkyle, aryle, aralkyle, alkanediyle, ardiyle et -(CH₂)_{f}-[CH(Ra₇)-CH₂-O]_{g}-(CH₂)ₕ -, où f est un nombre entier allant de 0 à 3 ; où g est un nombre entier allant de 1 à 100 ; où h est un nombre entier allant de 1 à 3 ; où Ra₇ est indépendamment choisi dans le groupe constitué d'hydrogène, alkyle, aryle et aralkyle ;
où X est indépendamment choisi dans le groupe constitué de 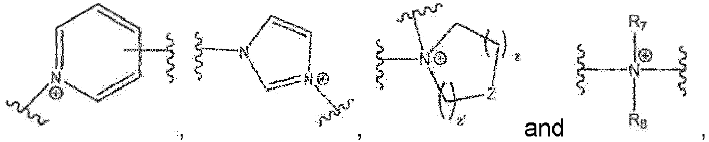
où Z est indépendamment choisi dans le groupe constitué de -CH₂-, O, S ; où z et z' sont des nombres entiers allant indépendamment de 1 à 6, où R₇ et Rs sont indépendamment choisis dans le groupe constitué d'hydrogène, alkyle, aryle, aralkyle et -CH₂-CH₂- (OCH₂CH₂)_{y}-OH, où y est un nombre entier allant de 1 à 4 ;
où dans le cas X est le pyridinium, R₁, R₂, R₄, Rset R₆ peut également être -CH₂- ;
où n est un nombre entier allant de 1 à 40 ;
où D est choisi dans le groupe constitué de -CH₂-CH(OH)-CH₂-, -CH₂-CH(SH)-CH₂-, -(CH₂)ᵢ-[CH (Rd₁)-CH₂-O]ⱼ- (CH₂)ₖ- et -CH₂-CH(OH)-(CH₂)ₗ-[CH(Rd₂)-CH₂-O]ₘ-(CH₂)ₚ-CH(OH)-CH₂-, où l est un nombre entier allant de 0 à 3 ; où j est un nombre entier allant de 1 à 100 ; où k est un nombre entier allant de 1 à 3 ; où Rd₁ est indépendamment choisi dans le groupe constitué d'hydrogène, alkyle, aryle et aralkyle ; où l est un nombre entier allant de 1 à 3 ; où m est un nombre entier allant de 1 à 100 ; où p est un nombre entier allant de 1 à 3 ; où Rd₂ est indépendamment choisi dans le groupe constitué d'hydrogène, alkyle, aryle et aralkyle,
où les unités individuelles A peuvent être identiques ou différentes, et
où les unités individuelles D peuvent être identiques ou différentes.

2. Polymère quaternisé à base de biuret selon la revendication 1, dans lequel X est indépendamment choisi dans le groupe constitué de

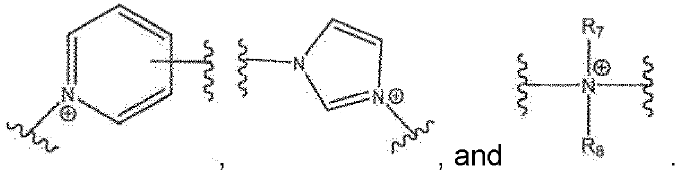

3. Polymère quaternisé à base de biuret selon l'une quelconque des revendications précédentes, dans lequel dans le polymère de formule (I) au moins un A est choisi comme une unité représentée par la formule (A1-1) 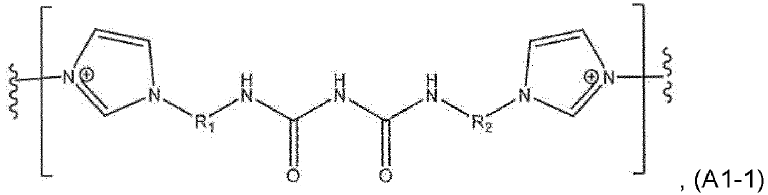 et/ou dans lequel au moins un A est choisi comme une unité représentée par la formule (A2-1) ou la formule (A2-2) 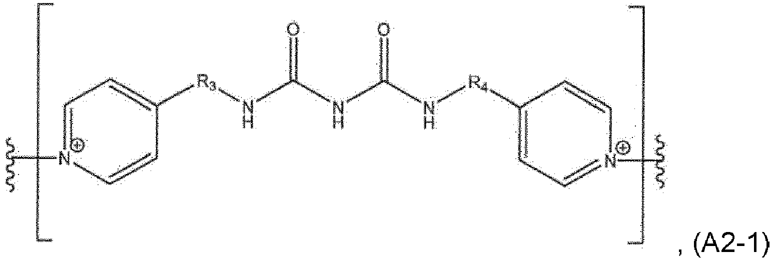 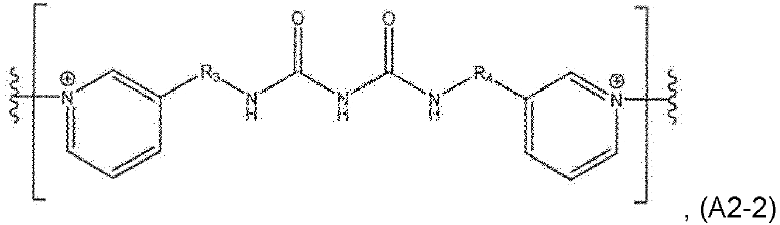 et/ou dans lequel dans le polymère de formule (I) au moins un A est choisi comme une unité représentée par la formule (A3-1)

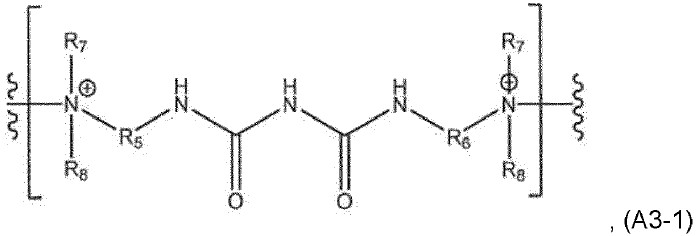

4. Polymère quaternisé à base de biuret selon l'une quelconque des revendications précédentes, dans lequel R₁, R₂, R₄, R₅et R₆ sont choisis indépendamment comme C₂-C₁₂-alkanediyle, de préférence en C₂-C₆- alkanediyle, plus préférablement comme -(CH₂)-(CH₂)-(CH₂)- et/ou où R₃ est choisi comme C₁-C₁₂-alkanediyle, de préférence comme C₁-C₄-alkanediyle, et plus préférablement comme -(CH₂)-(CH₂)-ou -(CH₂)-.

5. Polymère quaternisé à base de biuret selon l'une quelconque des revendications précédentes, dans lequel D est choisi dans le groupe constitué de - CH₂-CH(OH)-CH₂-, -(CH₂)ᵢ-[CH(Rd₁)-CH₂-O]ⱼ-(CH₂)ₖ- et -CH₂-CH(OH)-(CH₂)ₗ-[CH(Rd₂)-CH₂-O]ₘ-(CH₂)ₚ-CH(OH)-CH₂-, où i est un nombre entier allant de 0 à 3 ; où j est un nombre entier allant de 1 à 100 ; où k est un nombre entier allant de 1 à 3 ; où Rd₁ est indépendamment choisi dans le groupe constitué d'hydrogène, alkyle, aryle et aralkyle, de préférence dans le groupe constitué d'hydrogène, C₁-C₄ alkyle et phényle, plus préférablement dans le groupe constitué d'hydrogène et C₁-C₄ alkyle, et idéalement dans le groupe constitué d'hydrogène et de méthyle ; où l est un nombre entier allant de 1 à 3 ; où m est un nombre entier allant de 1 à 100 ; où p est un nombre entier allant de 1 à 3 ; où Rd₂ est choisi indépendamment dans le groupe constitué d'hydrogène, alkyle, aryle et aralkyle, de préférence dans le groupe constitué d'hydrogène, C₁-C₄alkyle et phényle, plus préférablement dans le groupe constitué d'hydrogène et C₁-C₄ alkyle, et encore idéalement dans le groupe constitué d'hydrogène et de méthyle.

6. Polymère quaternisé à base de biuret selon l'une quelconque des revendications précédentes, dans lequel D est choisi comme -(CH₂)ᵢ-[CH (Rd₁)-CH₂-O]ⱼ-(CH₂)ₖ-, dans lequel i vaut 2 ou 3 ; dans lequel j est un nombre entier allant de 1 à 25, où k est un nombre entier allant de 2 à 3 et où Rd₁ est choisi indépendamment dans le groupe constitué d'hydrogène et C₁-C₄ alkyle, de préférence d'hydrogène et de méthyle.

7. Polymère quaternisé à base de biuret selon l'une quelconque des revendications précédentes, dans lequel D est choisi dans le groupe constitué de - CH₂-CH₂-O-CH₂-CH₂- ;-CH₂-CH₂-O-CH₂-CH₂-O-CH₂-CH₂-and -CH₂-CH₂-O-CH₂-CH₂-O-CH₂-CH₂-O-CH₂-CH₂-.

8. Polymère quaternisé à base de biuret selon l'une quelconque des revendications précédentes, dans lequel le poids moyen de masse moléculaire (MW) des polymères va de 580 à 10000 g/mol, de préférence de 1000 à 7500 g/mol et plus préférablement de 500 à 6000 g/mol, idéalement de 1500 à 5000 g/mol.

9. Polymère quaternisé à base de biuret selon l'une quelconque des revendications précédentes, dans lequel les groupes amino tertiaire terminaux de A, y compris les atomes d'azote liés dans un cycle pyridine et/ou d'imdidazole, sont présents dans les polymères de formule (I) sont convertis en groupes aminés quaternaires respectifs en utilisant un monohalogénure organique ou un monopsydhalogénure organique tel que le chlorure de benzyle, le chlorure d'alkyle comme 1-chlorohexane ou les alkylhalogénures éthoxylés ou propoxylés, l'épichlorhydrine, le 2-(chlorométhyle)thiirane, le chlorure de propargyle ou le chlorure d'allyle ou leurs bromures et les mésylates correspondants, ou en utilisant un acide minéral approprié, tel que l'acide chlorhydrique, l'acide bromhydrique ou l'acide sulfurique.

10. Monomère quaternisé à base de biuret comprenant un composé selon la formule (Mo1) ou (Mo2) 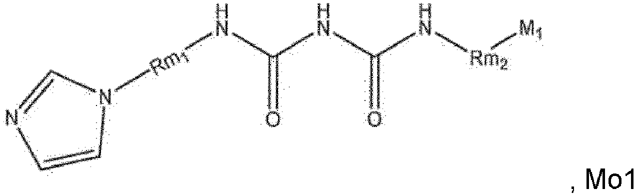 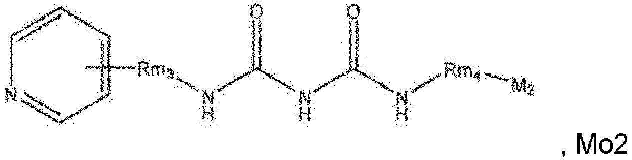
où Rm₁, Rm₂, et Rm₄ sont indépendamment choisis dans le groupe constitué de C₂-C₁₂-alkanediyle et -(CH₂)_{α}-[CH (Ra₆)-CH₂-O ]_{β}-(CH₂)_{X}- dans lequel α est un nombre entier allant de 0 à 3 ; où β est un nombre entier allant de 1 à 100 ; où × est un nombre entier allant de 1 à 3 ; où Ra₆ est choisi indépendamment dans le groupe constitué d'hydrogène, alkyle, aryle, aralkyle, alkanediyle, ardiyle et -(CH₂)_{f}-[CH(Ra₇)-CH₂-O]g- (CH₂)ₕ-, où f est un nombre entier allant de 0 à 3 ; où g est un nombre entier allant de 1 à 100 ; où h est un nombre entier allant de 1 à 3 ; où Ra₇ est choisi indépendamment dans le groupe constitué d'hydrogène, alkyle, aryle et aralkyle ;
où Rm₃ est choisi dans le groupe constitué de C₁-C₁₂-alkanediyle et - (CH₂)_{α}-[CH(Ra₆) -CH₂-O]_{β}-(CH₂)_{X}- où α est un nombre entier allant de 0 à 3 ; où β est un nombre entier allant de 1 à 100 ; où × est un nombre entier allant de 1 à 3 ; où Ra₆ est choisi indépendamment dans le groupe constitué d'hydrogène, alkyle, aryle, aralkyle, alkanediyle, ardiyle et -(CH₂)_{f}-[CH(Ra₇)-CH₂-O]_{g}-(CH₂)ₕ -, où f est un nombre entier allant de 0 à 3 ; où g est un nombre entier allant de 1 à 100 ; où h est un nombre entier allant de 1 à 3 ; où Ra₇ est choisi indépendamment dans le groupe constitué d'hydrogène, alkyle, aryle et aralkyle ;
où M₁ et M₂ sont indépendamment choisis dans le groupe constitué de 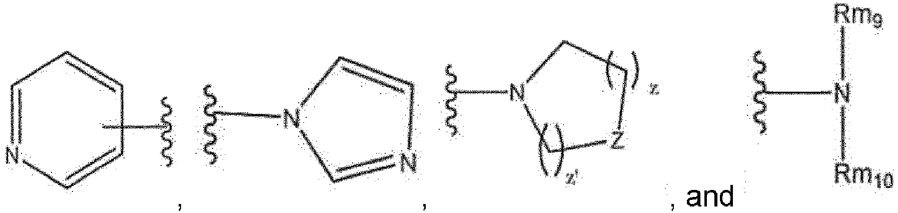
où Z est choisi parmi -CH₂-, O, S ; où z et z' sont des nombres entiers allant indépendamment de 1 à 6, où Rm_{g} et Rm₁₀sont indépendamment choisis dans le groupe constitué d'alkyle, aryle, aralkyle et -CH₂-CH₂-(OCH₂CH₂)_{ψ}-OH où _{ψ} est un nombre entier de 1 à 4,

11. Monomère quaternisé à base de biuret comprenant selon la revendication 10, dans lequel M1 et M2 sont indépendamment choisis dans le groupe constitué de

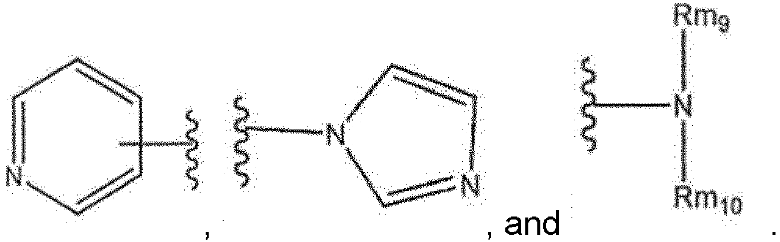

12. Monomère quaternisé à base de biuret comprenant selon la revendication 11 ou 12, dans lequel Rm₁, Rm₂ et Rm₄, sont sélectionnés comme C₂-C₁₂-alkanediyle, de préférence en C₂-C₆- alkanediyle, plus préférablement comme - (CH₂)-(CH₂)-(CH₂)-, et/ou dans lequel Rm₃ est choisi comme C₁-C₁₂-alkanediyle, de préférence comme C₁-C₄- alkanediyle, plus préférablement comme -(CH₂)-(CH₂)-ou-(CH₂)-.

13. Bain de placage de métal ou d'alliage métallique aqueux comprenant au moins une source d'ions métalliques qui est **caractérisé en ce que** il comprend au moins un polymère quaternisé à base de biuret selon l'une quelconque des revendications précédentes 1 à 9, dans lequel de préférence l'au moins une source d'ions métalliques est une source d'ions cuivre.

14. Procédé de dépôt de métal ou d'alliage métallique sur un substrat comprenant, dans cet ordre, les étapes consistant à
(i) fournir un substrat,
(ii) mettre en contact du substrat avec un bain de placage d'alliage métallique ou métallique selon la revendication 13, et
(iii) appliquer un courant électrique entre le substrat et au moins une anode,
et le dépôt de ce fait d'un métal ou d'un alliage métallique sur au moins une partie du substrat.

15. Procédé de synthèse d'un polymère quaternisé à base de biuret selon l'une quelconque des revendications 1 à 9, dans lequel le procédé comprend la fourniture d'au moins un matériau de départ représenté par l'une des formules (Mo1), (Mo2) et (Mo3) suivantes : 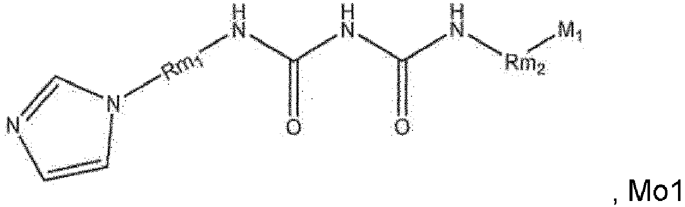 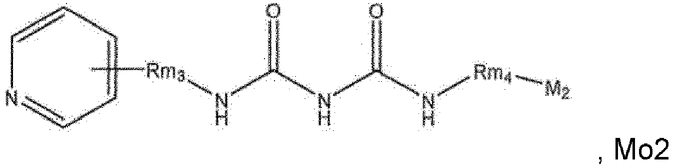 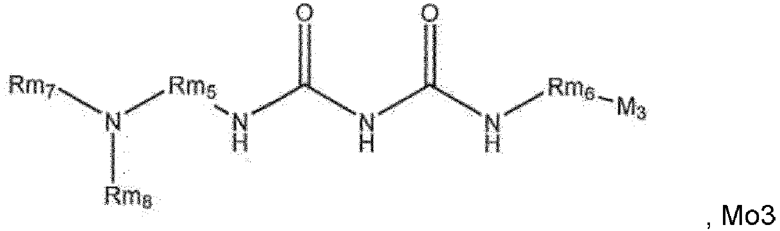
où Rm₁, Rm₂, Rm₄, Rm₅et Rm₆ sont indépendamment choisis dans le groupe constitué de C₂-C₁₂-alkanediyle et -(CH₂)_{α}-[CH(Ra₆)-CH₂-O]_{β}-(CH₂)_{X}- où α est un nombre entier allant de 0 à 3 ; où β est un nombre entier allant de 1 à 100 ; où × est un nombre entier allant de 1 à 3 ; où Ra₆ est choisi indépendamment dans le groupe constitué d'hydrogène, alkyle, aryle, aralkyle, alkanediyle, ardiyle et - (CH₂)_{f}-[CH(Ra₇)-CH₂-O]_{g}-(CH₂)ₕ -, où f est un nombre entier allant de 0 à 3 ; où g est un nombre entier allant de 1 à 100 ; où h est un nombre entier allant de 1 à 3 ; où Ra₇ est choisi indépendamment dans le groupe constitué d'hydrogène, alkyle, aryle et aralkyle ;
où Rm₃ est choisi dans le groupe constitué de C₁-C₁₂-alkanediyle et - (CH₂)_{α}-[CH(Ra₆) -CH₂-O]_{β}-(CH₂)_{X}- où α est un nombre entier allant de 0 à 3 ; où β est un nombre entier allant de 1 à 100 ; où × est un nombre entier allant de 1 à 3 ; où Ra₆ est choisi indépendamment dans le groupe constitué d'hydrogène, alkyle, aryle, aralkyle, alkanediyle, ardiyle et -(CH₂)_{f}-[CH(Ra₇)-CH₂-O]_{g}-(CH₂)ₕ -, où f est un nombre entier allant de 0 à 3 ; où g est un nombre entier allant de 1 à 100 ; où h est un nombre entier allant de 1 à 3 ; où Ra₇ est choisi indépendamment dans le groupe constitué d'hydrogène, alkyle, aryle et aralkyle ;
où M₁, M₂et M₃ est indépendamment choisi dans le groupe constitué de 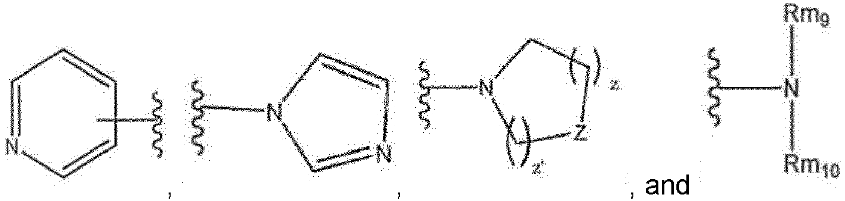
où Z est choisi parmi -CH₂-, O, S ; où z et z' sont des nombres entiers allant indépendamment de 1 à 6, où Rm_{g} et Rm₁₀sont indépendamment choisis dans le groupe constitué d'alkyle, aryle, aralkyle et -CH₂-CH₂-(OCH₂CH₂)_{ψ}-OH où _{ψ} est un nombre entier de 1 à 4,
où le procédé comprend la réaction de l'au moins un matériau de départ représenté par l'une des formules (Mo1), (Mo2) et (Mo3) avec un ou plusieurs des composés (B1) à (B4) suivants pour obtenir le polymère quaternisé à base de biuret, 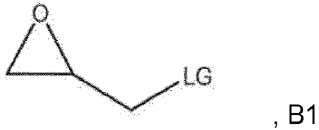 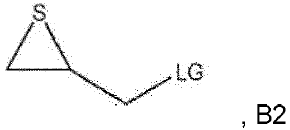 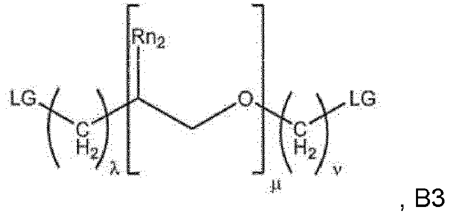 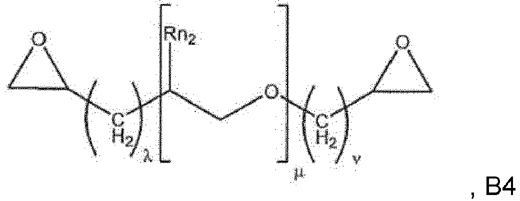
où LG est indépendamment choisi dans le groupe constitué de triflate, nonaflate, alkylsulfonates, arylsulfonates et halides ; où λ est un nombre entier allant de 1 à 3 ; où µ est un nombre entier allant de 1 à 100 ; où v est un nombre entier allant de 1 à 3 ; Rn₂ est indépendamment l'un de l'autre choisi dans le groupe constitué d'hydrogène, alkyle, aryle et aralkyle.
